# EUROPEAN PATENT APPLICATION

(11) **EP 4 814 750 A1**
(43) Date of publication of application: **30.09.2026**
(21) Application number: 26168039.1
(22) Date of filing: 26.03.2026
(51) Int. Cl.: G06F 16/9032, G06F 16/957

(54) **DYNAMIC CACHING FOR CHATBOTS USING MACHINE LEARNING**

(30) Priority: 28.03.2025 US 202519094466
(71) Applicant: ADP, Inc., Roseland, NJ 07068 (US)
(72) Inventor: BALASUBRAMANIYAN, Rajarajeswari, Roseland, 07068 (US); SHIVAM, Kumar, Roseland, 07068 (US); EO, Jongsung, Roseland, 07068 (US); PLOTKO, Dimitry, Roseland, 07068 (US); BALLA, Samhitha, Roseland, 07068 (US); NUNNA, Sri Manikanth, Roseland, 07068 (US); KATAMREDDY, Jashwanthreddy, Roseland, 07068 (US)
(74) Representative: Morrall, Jonathan Ian McLachlan

(57) **Abstract**

Machine-learning based dynamic caching for chatbots is described. A system identifies a session between a client device and a chatbot. The system inputs, into a generative artificial intelligence model, one or more queries and one or more corresponding responses from the session to construct a query and a response that, together, represent the session. The system validates the query and the response based on a first schema model established for a type of data field in the query and the response. The system creates a link between the query and the response. The system stores, responsive to the validation of the query and the response, the link, the query, and the response in a cache memory. The chatbot uses the link in the cache memory to service one or more subsequent queries provided to the chatbot.

## Description

### TECHNICAL FIELD

This disclosure is directed to computing technology and, for example, to providing responses to chatbot queries using a cache.

### BACKGROUND

A software program, such as a chatbot, can output responses based on queries received from a user. Chatbots execute various processing operations to provide responses, and such processing operations can increase response time and latency of the chatbot. In some examples, the processing operations can consume computing resources, such as processor cycles, memory, etc. There is a need to ensure that the processing operations consume optimal computing resources so that the response latency is within an acceptable range/threshold.

### SUMMARY

Technical solutions described herein include dynamic caching using machine learning or artificial intelligence (AI) for chatbots. Technical challenges when developing and implementing chatbots include processing delays and excessive resource consumption resulting from the execution of various operations required to provide accurate responses to user queries. For example, processing time for a query can include time used for natural language parsing, machine learning processing, and output generation. Machine learning processing can include determining an intent of the query, identifying data associated with the query or the intent, loading the data, and processing the data to generate a response to the query. To generate the response to the query, a machine learning or artificial intelligence model can consume computational resources over a duration of time (e.g., a processing time). Such processing operations can increase system memory load or increase latency beyond an acceptable threshold duration. However, bypassing one or more processing operations can reduce response accuracy.

The technical solutions described herein address such technical challenges. The technical solutions described herein use dynamic AI-based caching to construct query-response pairs based on chatbot interactions, store validated query-response pairs in fast-access cache memory, and provide cached responses in subsequent chatbot interactions in response to receiving a subsequent query that is similar to a cached query. For example, chatbot queries can vary in phrasing but request similar information, and constructing a response for each respective query individually can increase processing time or resource consumption by performing redundant operations. The technical solutions described herein address such technical challenges and reduce redundant processing operations by caching previous chatbot conversations, thereby facilitating faster response times for queries that are similar to a query that may have been processed previously. For example, the technical solutions described herein use generative AI to summarize one or more queries and corresponding responses from a session between a client device and a chatbot and retrieve a cached response generated using the summarized session data in response to identifying that a received query corresponds with the summarized session data. Additionally, or alternatively, the technical improvements are facilitated by applying a schema model to validate the formatting or content of query-response pairs for storage in the dynamic cache, which can improve response accuracy and reduce retrieval mismatches or inaccurate responses by providing fast access to pre-verified responses. The technical improvements are further facilitated by using smart caching to dynamically manage cache storage based on retrieval patterns or usage frequency of cached data.

One or more implementations of the technical solutions described herein are directed to a system. The system can include one or more processors coupled with memory. The one or more processors can identify a session between a client device and a chatbot. The one or more processors can input, into a generative artificial intelligence model, one or more queries and one or more corresponding responses from the session to construct a query and a response that represent the one or more queries and the one or more corresponding responses from the session. The one or more processors can validate the query and the response, constructed by the generative artificial intelligence model, based on a comparison of the query and the response with an expression of a first schema model established for a type of data field in the query and the response. The one or more processors can create a link between the query and the response. The one or more processors can store, responsive to the validation of the query and the response, the link, the query, and the response in a cache memory, and the chatbot can use the link in the cache memory to service one or more subsequent queries provided to the chatbot.

In some implementations, the one or more processors further identify, using the cache memory, a cached query from the cache memory that matches the one or more subsequent queries, determine, using the link in the cache memory, a cached response that is linked with the cached query, and provide, from the cache memory, responsive to the determination of the cached response, the cached response to the chatbot to cause the chatbot to perform an operation using the cached response.

In some implementations, the cache memory includes a warm cache, including a first plurality of cached queries linked with corresponding cached responses, wherein the first plurality of cached queries are pre-verified, and a cold cache, including a second plurality of cached queries linked with corresponding cached responses, wherein the second plurality of cached queries are unverified.

In some implementations, the one or more processors further identify a plurality of data objects, including pre-verified data, and extract one or more portions of the pre-verified data from the plurality of data objects using an expression of a second schema model established for a type of data field in the plurality of data objects. The processors construct, using the generative artificial intelligence model, a set of pre-verified queries and responses based on the one or more portions, and store the set of pre-verified queries and responses in a warm cache.

In some implementations, the one or more processors further execute a first search of a warm cache, in response to receipt of a first indication of a failure to locate a cached query via the first search, execute a second search of a cold cache, in response to receipt of a second indication of a failure to locate the cached query via the second search, construct a modeled response to the one or more subsequent queries using the generative artificial intelligence model, and present, via the chatbot, the modeled response responsive to the one or more subsequent queries.

In some implementations, the one or more processors further generate a plurality of metrics corresponding with the one or more subsequent queries and a plurality of queries of the cache memory, determine one or more metrics of the plurality of metrics satisfy at least one threshold, and identify, based on the one or more metrics satisfying the at least one threshold, at least one cached query of the plurality of queries that matches the one or more subsequent queries.

In some implementations, the one or more processors further determine that a subject of the one or more subsequent queries corresponds with at least one of a location or jurisdiction, select a vector model of a plurality of vector models based on the subject, and generate, using the selected vector model, an embedding of the one or more subsequent queries.

In some implementations, the one or more processors further pre-filter a plurality of vector models based on a subject of the one or more subsequent queries, select a vector model based on a subject of the one or more subsequent queries corresponding with at least one of a location or jurisdiction, wherein each vector model of the plurality of vector models is trained using a dataset corresponding with the at least one of the location or jurisdiction, and generate, using the selected vector model, an embedding of the one or more subsequent queries, wherein the chatbot uses the embedding to service the one or more subsequent queries provided to the chatbot.

In some implementations, the one or more processors further determine a first metric including a similarity score between an embedding of the one or more subsequent queries and one or more cached embeddings stored in the cache memory and determine a second metric including a distance score between the embedding and the one or more cached embeddings.

In some implementations, to input the one or more queries and corresponding responses, the one or more processors further generate a prompt corresponding to a subject of the one or more queries and the one or more corresponding responses from the session and provide the prompt to the generative artificial intelligence model.

In some implementations, to validate the query and the response, the one or more processors further identify, in the query and the response, a plurality of fields corresponding to the first schema model, the first schema model including a regular expression and a data type for each field and determine, based on an application of the regular expression, contents of the plurality of fields match an expected pattern of each data type.

In some implementations, the cache memory includes a plurality of links between respective pairs of queries and responses.

One or more implementations of the technical solutions described herein are directed to a method. The method can include identifying, by one or more processors coupled with memory, a session between a client device and a chatbot. The method can include inputting, by the one or more processors, into a generative artificial intelligence model, one or more queries and one or more corresponding responses from the session to construct a query and a response that represent the one or more queries and the one or more corresponding responses from the session. The method can include validating, by the one or more processors, the query and the response, constructed by the generative artificial intelligence model, based on a comparison of the query and the response with an expression of a first schema model established for a type of data field in the query and the response. The method can include creating, by the one or more processors, a link between the query and the response. The method can include storing, by the one or more processors, responsive to the validation of the query and the response, the link, the query, and the response in a cache memory, wherein the chatbot uses the link in the cache memory to service one or more subsequent queries provided to the chatbot.

In some implementations, the method can include identifying, by the one or more processors, using the cache memory, a cached query of the cache memory that matches the one or more subsequent queries, determining, by the one or more processors, using the link in the cache memory, a cached response that is linked with the cached query, and providing, by the one or more processors, from the cache memory, responsive to determination of the cached response, the cached response to the chatbot to cause the chatbot to perform an operation using the cached response.

In some implementations, the cache memory includes a warm cache including a first plurality of cached queries linked with corresponding cached responses, wherein the first plurality of cached queries are pre-verified, and a cold cache including a second plurality of cached queries linked with corresponding cached responses, wherein the second plurality of cached queries are unverified.

In some implementations, the method can include identifying, by the one or more processors, a plurality of data objects including pre-verified data, extracting, by the one or more processors, one or more portions of the pre-verified data from the plurality of data objects using an expression of a second schema model established for a type of data field in the plurality of data objects, constructing, by the one or more processors, using the generative artificial intelligence model, a set of pre-verified queries and responses based on the one or more portions, and storing, by the one or more processors, the set of pre-verified queries and responses in a warm cache.

In some implementations, the method can include executing, by the one or more processors, a first search of a warm cache, in response to receipt of a first indication of a failure to locate a cached query via the first search, executing, by the one or more processors, a second search of a cold cache, in response to receipt of a second indication of a failure to locate the cached query via the second search, constructing, by the one or more processors, a modeled response to the one or more subsequent queries using the generative artificial intelligence model, and presenting, by the one or more processors, via the chatbot, the modeled response responsive to the one or more subsequent queries.

In some implementations, the method can include generating, by the one or more processors, a plurality of metrics corresponding with the one or more subsequent queries and a plurality of queries of the cache memory, determining, by the one or more processors, one or more metrics of the plurality of metrics satisfy at least one threshold, and identifying, by the one or more processors, based on the one or more metrics satisfying the at least one threshold, at least one cached query of the plurality of queries that matches the one or more subsequent queries.

In some implementations, the method can include determining, by the one or more processors, that a subject of the one or more subsequent queries corresponds with at least one of a location or jurisdiction, selecting, by the one or more processors, a vector model of a plurality of vector models based on the subject, and generating, by the one or more processors, using the selected vector model, an embedding of the one or more subsequent queries.

One or more implementations of the technical solutions described herein are directed to a non-transitory computer-readable media (CRM) having instructions stored thereon that, when executed by one or more processors, cause the one or more processors to identify a session between a client device and a chatbot. The instructions can cause the one or more processors to input, into a generative artificial intelligence model, one or more queries and one or more corresponding responses from the session to construct a query and a response that represent the one or more queries and the one or more corresponding responses from the session. The instructions can cause the one or more processors to validate the query and the response, constructed by the generative artificial intelligence model, based on a comparison of the query and the response with an expression of a first schema model established for a type of data field in the query and the response. The instructions can cause the one or more processors to create a link between the query and the response. The instructions can cause the one or more processors to store, responsive to the validation of the query and the response, the link, the query, and the response in a cache memory, wherein the chatbot uses the link in the cache memory to service one or more subsequent queries provided to the chatbot.

These and other implementations are discussed in detail below. The foregoing information and the following detailed description include illustrative examples of various implementations and provide an overview or framework for understanding the nature and character of the claimed implementations. The drawings provide illustrations and a further understanding of the various implementations and are incorporated in and constitute a part of this specification. The foregoing information and the following detailed description and drawings include illustrative examples and should not be considered as limiting.

### BRIEF DESCRIPTION OF THE FIGURES

Implementations of the present disclosure are described in the detailed description which follows, in reference to the noted plurality of drawings by way of non-limiting examples of exemplary embodiments of the technical solutions described herein.
FIG. 1 is an illustrative example of a system for dynamic caching for chatbots using machine learning, in accordance with some implementations.
FIGS. 2A-2B are illustrative examples of a computer-implemented method for dynamic caching for chatbots using machine learning, in accordance with some implementations.
FIG. 3 is an illustrative example of a system for dynamic caching for chatbots using machine learning, in accordance with some implementations.
FIG. 4 is an illustrative example of a computer-implemented method for summarizing, storing, and using session data for chatbot, in accordance with some implementations.
FIG. 5 is an illustrative example of a computer-implemented method for post-processing and caching for chatbots, in accordance with some implementations.
FIG. 6 depicts an illustrative architecture of a computing system implemented in some implementations.

### DETAILED DESCRIPTION

Following below are more detailed descriptions of various concepts related to, and implementations of, systems, methods, or non-transitory computer-readable storage media (CRM) for dynamic caching for chatbots using machine learning. The various concepts introduced above or discussed in greater detail below can be implemented in any of numerous ways.

Implementations of technical solutions described herein relate to using machine learning to improve dynamic caching for chatbots. For example, the technical solutions described herein provide fast access to pre-verified or accurate responses to chatbot queries using a cache memory. The technical solutions described herein can identify a session between a client device and a chatbot. For example, a session can include one or more queries and corresponding responses exchanged between a client or user device and the chatbot during a chatbot conversation. The technical solutions described herein can analyze or process one or more queries and one or more corresponding responses from the session to construct a query and a response that represent the one or more queries and the one or more corresponding responses from the session. For example, an artificial intelligence model, such as a large language model (LLM), can be used to construct and store a summarized chatbot session in a cache memory. The technical solutions described herein can validate the query and the response constructed by the generative artificial intelligence model. For example, validation can be performed by comparing the generated query and response against a schema model associated with one or more data fields of the generated query or response. The technical solutions described herein can create a link between the generated query or response. For example, creating a link can include establishing a data association between the generated query and response. The technical solutions described herein can store, responsive to the validation of the query and the response, the link, the query, and the response in a cache memory. For example, storing the link, query, and response in a cache memory can include activating the query and response as a linked pair in the cache memory. The chatbot can use the link in the cache memory to service one or more subsequent queries provided to the chatbot. For example, in response to detecting that similarity of a subsequent query with the summarized chatbot session from the cache is above a certain threshold, the technical solutions described herein can retrieve or provide a cached response associated with the summarized chatbot session from the cache memory.

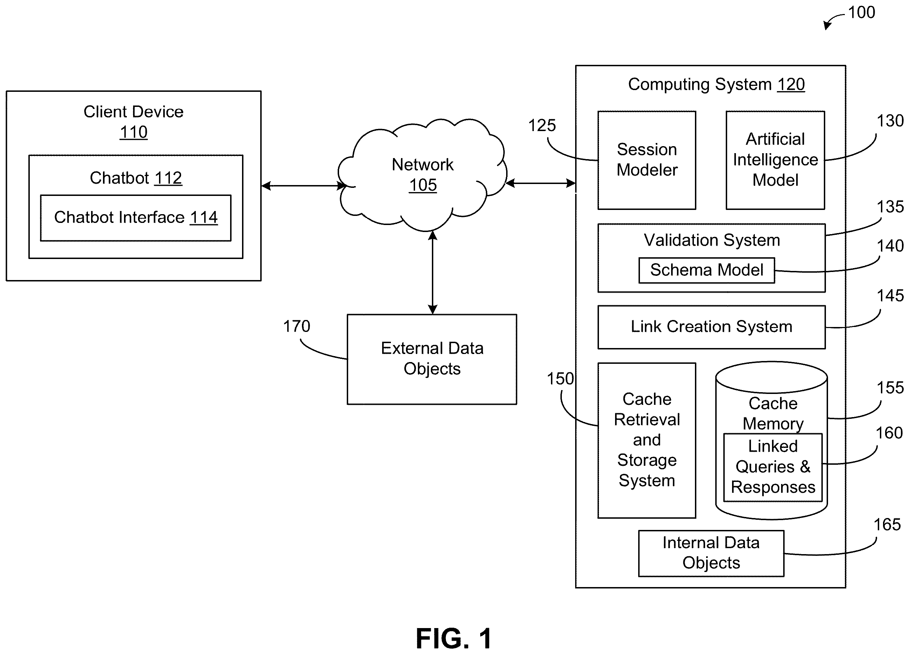

FIG. 1 is an illustrative example of system 100 with dynamic caching using machine learning for chatbots according to one or more implementations. The system 100 can include a computing system 120 that communicates or otherwise interfaces with a client device 110 via a network 105. The client device 110 can include a chatbot 112, which can include a chatbot interface 114. The computing system 120 can communicate or otherwise interface with the client device 110 via the network 105 to receive user queries and provide corresponding responses via the chatbot interface 114. The computing system 120 can include one or more of a session modeler 125 and an artificial intelligence (AI) model 130 for summarizing chatbot sessions or constructing queries and responses. The computing system 120 can include a validation system 135, which can include a schema model 140 for validating outputs generated by, for example, the session modeler 125 or AI model 130. The computing system 120 can further include a link creation system 145 for creating a link between queries and corresponding responses. The computing system 120 can include a cache retrieval and storage system 150, which can interface with a cache memory 155 configured to store one or more linked queries and responses 160. The system 100 can include internal data objects 165 accessible by, for example, the client device 110, computing system 120, or sub-systems of the computing system 120. The system 100 can also include external data objects 170 accessible by, for example, the client device 110, computing system 120, or sub-systems of the computing system 120.

Although the components of FIG. 1 are described in the singular form herein (e.g., a client device 110, computing system 120, etc.), it should be understood that the system 100 can include two or more of any components (e.g., two client devices 110, etc.). Each of the components or subsystems of system 100 (e.g., client device 110, computing system 120, session modeler 125, AI model 130, validation system 135, link creation system 145, cache retrieval and storage system 150, cache memory 155, etc.) can include one or more processors coupled with memory or software and capable of performing the various processes and tasks described herein, such as, for example, summarizing chatbot sessions, storing generated query and response pairs, or providing responses to subsequent queries. In some implementations, one or more of the sub-systems of the computing system 120 (e.g., session modeler 125, AI model 130, validation system 135, link creation system 145, cache retrieval and storage system 150, cache memory 155, etc.) can be local to or remote from the computing system 120.

The network 105 can include a wireless or wired connection for enabling the client device 110 or the computing system 120 to, for example, store, transmit, receive, display, or process information for dynamic assist service orchestration. The network 105 facilitates the client device 110 or the computing system 120 communicating with internal subcomponents (described herein) or external components. The computing system 120, for example, receives data from the client device 110 and transmits data to the client device 110 via the network 105. For example, computing system 120 can identify queries and corresponding responses provided via the chatbot interface 114 of the client device 110. The network 105 can include, for example, a hardwired connection (e.g., copper wire or fiber optics) or a wireless connection (e.g., wide area network (WAN), controller area network (CAN), local area network (LAN), or personal area network (PAN)). For example, the network 105 can support Wi-Fi, Bluetooth, BLE, or other communication protocols for transferring data. In some implementations, one or more components of FIG. 1 (e.g., client device 110, computing system 120) use network 105 to perform the various processes and tasks described herein (e.g., summarizing chatbot sessions, storing generated query and response pairs, performing dynamic cache operations, etc.).

The network 105 can facilitate communications in accordance with various communication protocols including, for example, Transmission Control Protocol and Internet Protocol (TCP/IP), User Datagram Protocol (UDP), or IEEE communication protocols. The network 105 can include wireless communications according to, for example, Bluetooth specification sets, or another standard or proprietary wireless communication protocol. In another example, the network 105 can also include communications over a cellular network, including, for example, a GSM (Global System for Mobile Communications), CDMA (Code Division Multiple Access), EDGE (Enhanced Data for Global Evolution) network.

The systems or sub-systems described herein with regard to FIG. 1 (e.g., client device 110, computing system 120, session modeler 125, AI model 130, validation system 135, link creation system 145, cache retrieval and storage system 150, cache memory 155, etc.) can include any combination of hardware and software. For example, client device 110, computing system 120, session modeler 125, AI model 130, validation system 135, link creation system 145, cache retrieval and storage system 150, cache memory 155, etc. can include any computing device including one or more processors coupled with memory or software and capable of performing the various processes and tasks described herein.

The client device 110 can include a laptop, a desktop computer, a smart phone, a tablet, etc. In some implementations, the client device 110 can be operated by or associated with a user or client. The client device 110 can execute various applications including any platform for performing various tasks or operations including, for example, a low-code platform, no-code platform, software-as-a-service platform (SaaS), web application, web browser, desktop application, or others. For example, the client device 110 can execute chatbot 112 and use a chatbot interface 114 to receive queries and display responses. In some implementations, the client device 110 can include various input or output devices (e.g., an input/output circuit, a pointing device, a keyboard, a display, a touch screen, a microphone, a speaker, etc.). For example, the client device 110 can receive a query via a user interaction with an input element (e.g., keyboard, microphone, touch screen, etc.). In response to receiving the user query, the client device 110 can transmit session data corresponding to the user query (e.g., past queries and corresponding response) to the computing system 120, receive one or more responses corresponding to the user query identified by the computing system 120, and display data corresponding to one or more responses via an output element of the client device 110 (e.g., screen, speaker, etc.).

The chatbot 112 can include or refer to any data processing system that can receive an input and provide or display an output (e.g., via chatbot interface 114). An input may include or refer one or more user queries inputted to the chatbot interface 114 during a chatbot session. An output may include or refer to one or more prompts or responses to a user query provided via the chatbot interface 114 during a chatbot session. The chatbot 112 or chatbot interface 114 can include one or more user interfaces. For example, the chatbot 112 or chatbot interface 114 can refer to or include, for example, one or more graphical user interfaces (GUIs), text-based interfaces (e.g., messaging app, chat window in a web application, etc.), voice-based interfaces (e.g., virtual assistant on a smart device), multimodal interfaces (e.g., interface combining text, voice, or other inputs and outputs to facilitate user interaction), or other such interfaces. The chatbot 112 can be implemented in a distributed configuration, a non-distributed configuration, or any other such configuration. In a distributed configuration, one or more operations associated with the chatbot 112 can be executed or maintained on client device 110 (e.g., a thin client), and one or more remaining operations associated with the chatbot 112 can be executed or maintained on computing system 120. In a non-distributed configuration, the computing system 120 can execute or maintain the operations associated with the chatbot 112, and the client device 110 can transmit inputs and receive outputs associated with chatbot 112 to and from the computing system 120.

The chatbot 112 or chatbot interface 114 can display various information (e.g., images, text-based information, prompts, etc.) or interactive elements (e.g., user input fields, buttons, menus, etc.) via client device 110 (e.g., using the GUI). For example, the chatbot 112, chatbot interface 114, or client device 110 can display, responsive to a user query, an output or response to the user query using a graphical user interface. In some implementations, the chatbot 112, chatbot interface 114, or client device 110 can provide a prompt to a user for input via a graphical user interface and receive a selection or input responsive to the prompt from the user. For example, the client device 110, chatbot 112, or computing system 120 can dynamically update or cause the chatbot interface 114 (e.g., GUI) to update the arrangement of information or elements displayed via chatbot interface 114 in response to various conditions or received data. The chatbot 112 can include various back-systems or functionalities (e.g., chatbot services). For example, the chatbot 112 can include artificial intelligence functionalities or interface with an artificial intelligence model (e.g., AI model 130, an LLM, etc.) to generate responses to queries, as further described herein.

The chatbot 112, via the chatbot interface 114, can receive one or more user queries and provide one or more responses during a chatbot session. A chatbot session can include or refer to any sequence of interactions between a user of client device 110 and chatbot 112 in which queries and responses can be, for example, processed, stored, retrieved, or utilized based on system operations. For example, a chatbot session can include any real-time, near real-time, or asynchronous exchanges in which chatbot 112 processes queries, generates responses, or stores, updates, or retrieves session data based on contextual parameters, system operations, or other data. During a session, the chatbot 112 can receive one or more queries in the form of user input via the client device 110. Receiving user input or queries can include determining that a query is inputted into a text input field or a corresponding user input element (e.g., "enter" or "submit" button, etc.) is selected. The chatbot 112, via the chatbot interface 114, can provide outputs or responses to queries during a chatbot session. For example, the chatbot 112 can provide an output or response to a user query via an output device of the client device 110. In some examples, a user may input a query via a first portion of the chatbot interface 114 and may receive a response via a second portion of the chatbot interface 114. The chatbot 112, via the chatbot interface 114, can receive a response to a prompt. For example, the chatbot 112 can transmit a prompt to a user, receive an input responsive to the prompt (e.g., a selection of one or more options presented to a user), and perform various operations based on the user selection.

The computing system 120 can provide dynamic caching using machine learning for the chatbot 112. For example, the computing system 120 can include a laptop, desktop computer, smart phone, tablet, server, database, etc., or can include a collection of such devices. The computing system 120 can include a communications unit configured to facilitate communications with, or otherwise interface with, one or more components of the computing system 120 or the system 100. For example, the computing system 120 can receive data (e.g., user queries and corresponding responses) from the client device 110 and provide data (e.g., a cached response) to the client device 110 during a session or in response to detecting a termination of the session. The computing system 120 can execute various processes associated with an organization. The computing system 120 can include subsystems or subcomponents including, for example, session modeler 125, AI model 130, validation system 135, link creation system 145, cache retrieval and storage system 150, or cache memory 155. In some implementations, the AI model 130 can be separate from the computing system 120 and can interface with the computing system 120 remotely over the network 105 (e.g., by transmitting or receiving data). In some implementations, the chatbot 112 can be separate from the computing system 120 and can interface with the computing system 120 remotely over the network 105 (e.g., by transmitting or receiving data).

The session modeler 125 can identify a session between the client device 110 and the chatbot 112. For example, the session modeler 125 can determine that a session is initiated based on a user query being input via the chatbot interface 114 of the client device 110. Identifying a session can include associating received queries and responses with a session identifier and tracking or maintaining interactions between the chatbot 112 and the client device 110 for subsequent modeling or storage. In some implementations, the session modeler 125 can detect session termination based on a condition or event, such as a timeout period or a user action (e.g., exiting a chat). In some implementations, the session modeler 125 can detect session termination by detecting a topic change during a session. For example, detecting a topic change can include the session modeler 125 identifying that a subject or intent of one or more first queries previously provided to the chatbot 112 differs from a subject or intent or one or more second queries provided subsequent to the first queries. Upon, responsive to, or based on the topic change, the session modeler 125 can terminate a first session associated with the first queries and initiate a second session associated with the second queries, as described further below.

For example, the client device 110 can initiate a session by when a user navigates to the chatbot 112 and provides an initial user query. The chatbot 112 can be an application or web-based platform (e.g., chatbot interface 114). The chatbot 112 can receive one or more queries during the session and generate corresponding responses using real-time processing (e.g., dynamic response modeling using AI) or cached data retrieval. The session modeler 125 can monitor the session by associating received queries and responses with a session identifier and updating stored session data. In some implementations, the session modeler 125 can determine that a session is terminated based on, for example, detecting a lack of user interaction over a predefined time period, receiving a session termination command, detecting a navigation event that indicates the user has exited the chatbot interface 114, or using other such techniques. In some implementations, the session modeler 125 splits an ongoing conversation between the chatbot 112 and a user into multiple sessions based on intent detection. For example, if a first set of queries is associated with a first intent, the first set of queries is associated with a first session. Upon detecting a second set of queries, even during the same ongoing conversation, that is associated with a second intent, the session modeler 125 associates the second set of queries with a second session. The intent of the query(ies) is detected using natural language parsing and/or any known or yet-to-be-developed intent-detection techniques. Upon session termination, the session modeler 125 can collect and organize session data, including queries and responses exchanged during the session, for further processing. The session modeler 125 can transmit or input the collected session data to the AI model 130 for query-response construction.

The AI model 130 can include or refer to one or more machine learning (ML) or AI models that generate content or new content including, for example, text, images, code, by learning patterns and structures from existing data. For example, the AI model 130 can include a model, a computational system, or an algorithm that can learn patterns from data (e.g., chunks of data from various input documents, computer code, templates, forms, etc.) and make predictions or perform tasks without being explicitly programmed to perform such tasks. In some implementations, the AI model 130 can refer to or include an ML model that has been trained using machine learning to perform a task including, for example, classification, regression, clustering, or other such techniques. Examples of ML training techniques can include, for example, decision trees, neural networks, support vector machines, or a combination thereof. In some implementations, the AI model 130 can refer to or include, for example, a large language model (LLM), a neural network, or any type of artificial intelligence.

The AI model 130 can include one or more LLMs. An LLM can include or refer to a neural network-based model with a parameter count (e.g., number of adjustable weights) substantially equivalent to or exceeding 100 billion parameters and trained on vast and heterogeneous datasets (e.g., collections of text from books, articles, web pages, etc.) to perform a range of tasks, including text generation, contextual question answering, and language analysis across diverse domains. In some implementations, the AI model 130 can also include or refer to small or medium-sized models (e.g., models with less than 100 billion parameters or trained for delimited tasks) or collections of such models. For example, the AI model 130 can include or refer to a collection or suite of rule-based systems and machine learning models used to perform domain-based tasks including, for example, natural language processing, document analysis, enterprise data interpretation, or other such tasks.

In some implementations, the AI model 130 can include, refer to, or otherwise utilize or access a retrieval-augmented generation (RAG) system. For example, the AI model 130 can be designed, constructed, or include a transformer architecture with one or more of a self-attention mechanism (e.g., model used to weigh the importance of different words or tokens in a sentence when encoding a word at a particular position), positional encoding, or encoder and decoder layers (e.g., multiple layers containing multi-head self-attention mechanisms and feedforward neural networks). Transformer architecture can include, for example, a generative pre-trained transformer, a bidirectional encoder representations from transformers (BERT), a transformer-XL (e.g., using recurrence to capture longer-term dependencies beyond a fixed-length context window), a text-to-text transfer transformer, etc.

The AI model 130 can be trained using a dataset of documents (e.g., web pages or content, text, images, videos, audio, or other data) and can be designed to understand and extract relevant information from the dataset. The AI model 130 can be trained (e.g., by a model training function) using any text-based dataset by converting the text data from the input dataset documents into numerical representations (e.g., embeddings) of the chunks of the documents. In some implementations, the artificial intelligence model 130 can be generated or built using deep learning techniques, such as neural networks. Through training, the AI model 130 can adjust various internal parameters, such as relationships between embeddings or numerical values learned during training, to optimize performance and improve the accuracy of outputs or predictions. In some implementations, adjusting internal parameters can include iteratively presenting embeddings of dataset chunks to the AI model 130, comparing outputs of the AI model 130 to verified or known results, and updating parameters (e.g., modifying weight matrices, recalibrating biases, or fine-tuning activation thresholds of the AI model 130) based on results of the comparison. By iteratively learning from the dataset embeddings, the AI model 130 can generalize knowledge and generate accurate predictions or relevant insights when processing prompts (e.g., session data, queries, requests, etc.).

The AI model 130 can construct a query and response that represent one or more queries and one or more corresponding responses from the session. For example, the session modeler 125 can input one or more queries and one or more corresponding responses from the session into the AI model 130. Inputting can include providing or transmitting a prompt or request including the session data to the AI model 130. For example, the session modeler 125 can format session data as an input sequence that includes multiple user queries, chatbot responses, metadata, session parameters, instructions, or other information used to provide data or context for generating a representative query-response pair. The AI model 130 can analyze or model the inputted data (e.g., user queries and chatbot responses exchanged during the session) to generate a representative query-response pair. For example, the AI model 130 can summarize session content and condense similar queries and responses to generate a standardized query and a standardized response.

The AI model 130 can summarize session content by applying natural language processing (NLP) techniques including, for example, tokenization, part-of-speech tagging, dependency parsing, named entity recognition (NER), etc., or a combination thereof, to extract terms or concepts from received queries and responses. The AI model 130 can apply clustering techniques (e.g., k-means clustering, hierarchical clustering), sequence-to-sequence (Seq2Seq) modeling, or other techniques to condense multiple semantically similar queries and responses into a single standardized query-response pair. In some implementations, the AI model 130 can utilize an attention mechanism to assign weight to words or phrases within the session such that generated queries and responses retain an intent, meaning, or other semantic element (e.g., subject, conclusion, structure, preference, etc.) represented by the queries and responses in the identified session. For example, the AI model 130 can determine information to include or remove when summarizing queries and responses. In some examples, the determination is based on frequency of occurrence of terms or phrases in the queries or responses, user inputs or reactions to responses, selected filters or pre-filters, user preferences, session values (e.g., a length of a session, geolocation, etc.), consistency of responses across similar queries, alignment of responses with previously provided information, relevance of terms to an intent or subject of the session, reduction of extraneous or repetitive content, utility of contextual information, or structural clarity. The AI model 130 can generate a standardized query and response by filtering out redundant phrasing, normalizing synonyms, and aligning terminology including the previous queries and responses from the session. For example, the AI model 130 can generate a standardized response by applying summarization techniques using transformer-based text generation models to construct a response that retains useful information from the session and eliminates, for example, redundant information, inaccurate information, extraneous information, or other such information.

The validation system 135 can validate or verify the query and response generated by the AI model 130. The validation may occur prior to storage of the query and response in the cache memory 155. For example, the validation system 135 can execute a comparison of the query and response using the schema model 140. The schema model 140 can include or apply data including, for example, various conditions, constraints, or expected values for one or more types of data fields in the query and response for storage in cache memory 155. For example, validating a query and response can include the validation system 135 applying structural or content-based rules, verifying compliance with predefined formats or structures, or detecting inconsistencies, errors, or deviations using the schema model 140. For example, the validation system 135 can compare the query and response with an expression of the schema model 140 that specifies information such as expected data types, fields, character limits, or other formatting rules for content included in the summarized chatbot session (e.g., numerical values for timestamps, predefined taxonomies for categorical fields, or expected syntactic patterns in text responses).

The schema model 140 can include rule-based validation mechanisms (e.g., regular expressions, logic-based constraints), classification models used to verify the accuracy of generated query-response pairs, or other such validation schemes. In some implementations, the validation system 135 can apply both syntactic validation (e.g., verifying adherence to predefined formatting rules) and semantic validation (e.g., assessing contextual alignment between a query and corresponding response). The validation system 135 can detect anomalies, such as unexpected formatting deviations, missing required fields, and inconsistencies in structured data. In some examples, the anomalies are detected based on comparing the generated query and response to the schema model 140. If the query and response meet validation criteria, the validation system 135 can transmit the validated query-response pair to the cache retrieval and storage system 150 for storage in the cache memory 155. If validation fails, the validation system 135 can discard the query-response pair, request modifications, flag the output for further review, or perform other output actions.

The link creation system 145 can create a link between the query and the response. Creating a link can include associating a stored query with a corresponding response by generating a data object (e.g., a JSON object) with one or more data fields. For example, the link creation system 145 can create and store a structured data object configured to store a related query and response together (e.g., including a query field and a response field) in the cache memory 155. For example, the link creation system 145 can create and store multiple structured data objects, each including a query or response field and a field for a reference (e.g., identifier, address, embedding, etc.) used to identify or provide access to a corresponding query or response. The link creation system 145 can generate an identifier for each query-response pair, which can be stored in the structured data object and used to retrieve related pairs. The identifier can be generated based on attributes of the query including, for example, a hash of the query text, a system-generated key, or a reference to an indexed data structure. The link creation system 145 can also store query-response pairs as key-value pairs in cache memory 155 (e.g., with a query used as a key and a corresponding response used as a value). In some implementations, the link creation system 145 can generate references between stored query-response pairs based on embeddings of queries and responses represented as vectors in a multi-dimensional vector space. For example, the link creation system 145 can generate and store embeddings of queries and responses in a vector space and associate each query-response pair with a reference to a corresponding embedding. In response to receiving a query, the link creation system 145 can perform a similarity search to identify a stored query embedding within cache memory 155 with a high similarity score to the received query, retrieve the linked response, and provide the response (e.g., without a full text match).

The cache retrieval and storage system 150 can store the link, the query, and the response in cache memory 155. Storing can include generating a structured entry in the cache memory 155 that associates the query and response via a link. In some implementations, the cache retrieval and storage system 150 can store query-response pairs in a structured format (e.g., as a JSON object with defined fields for a query and a response, or an associated link or reference to an object storing a corresponding query or response), as key-value pairs, or as embeddings in a vector space. The cache retrieval and storage system 150 can store the link, the query, and the response in a cache memory responsive to the validation of the query and the response by the validation system 135 using schema model 140. For example, the cache memory 155 can store verified or validated query-response pairs. In some implementations, the cache retrieval and storage system 150 can include or interface with multiple storages to manage validated and unvalidated query-response pairs. For example, the cache memory 155 can include a warm cache configured to store pre-verified query-response pairs and a cold cache configured to store unverified query-response pairs.

The cache memory 155 can include any combination hardware or software for storing linked queries and responses. In some implementations, information or data in the cache memory 155 is stored using any type of memory, such as a cloud or hard drive. The cache memory 155 can include, for example, random access memory (RAM), dynamic random access memory (DRAM), static random access memory (SRAM), error-correcting code (ECC), read only memory (ROM), programmable read only memory (PROM), or electrically erasable read only memory (EEPROM). The information or data structures (e.g., scanned documents, digital content, records, tables, lists, or spreadsheets) included within cache memory 155 can be dynamic and change periodically (e.g., daily or by milliseconds); via an input from a user (e.g., a user operating the client device 110); via inputs from various components of the system 100 (e.g., computing system 120) and sub-systems of the computing system 120 (e.g., session modeler 125), or via an external update to the system 100.

The cache memory 155 can store queries, responses, and links, and corresponding data. For example, the cache memory 155 can refer to a semantic cache configured to store cached queries and corresponding cached responses that are linked such that a cached query can be used to identify a similar or corresponding cached response. For example, the cache memory 155 can store pairs of cached queries mapped to corresponding responses (e.g., Q&A pairs) and retrieve the corresponding responses based on receiving a subsequent query matching one of the cached queries. In some implementations, the cache memory 155 can store or access metadata associated with query-response pairs (e.g., timestamps, usage frequency, classification labels, etc.). The cache memory 155 can perform smart caching by applying cache retention or eviction policies (e.g., Least Recently Used (LRU), Least Frequently Used (LFU), Time-to-Live (TTL)) to remove outdated or infrequently accessed entries, thereby maintaining optimal cache performance. The cache memory 155 can perform semantic caching by indexing stored vector representations of query and response pairs based on linguistic or contextual attributes or similarity metrics (e.g., cosine similarity, Euclidean distance).

The cache retrieval and storage system 150 can identify a cached query of the cache memory 155 that matches a subsequent query provided to the chatbot 112. For example, identifying a cached query can include determining one or more accuracy values or relevance scores corresponding to the subsequent query and one or more cached queries. The accuracy values or relevance scores can include or refer to similarity metrics (e.g., cosine similarity, Euclidean distance, other vector space measures) used to evaluate or compare a subsequent query to a plurality of cached queries in the cache memory 155 based on, for example, linguistic elements, semantic elements, contextual elements, or other such elements (e.g., frequency of terms, semantic overlap, patterns, etc.). In some implementations, the cache retrieval and storage system 150 can execute a semantic search of the cache memory 155. For example, executing a semantic search can include determining similarity scores, distances in a multi-dimensional vector space, and other metrics to identify a cached query that matches with a subsequent query. Using the accuracy values or relevant scores, the cache retrieval and storage system 150 can determine if a cached response stored in the cache memory 155 matches (e.g., is similar to) one or more subsequent queries. For example, the cache retrieval and storage system 150 can compare a threshold and one or more similarity metrics generated for the cached queries and a subsequent query. Foe example, the threshold can include or refer to a value or metric indicating that similar linguistic, semantic, or contextual elements exist between the subsequent query and the one or more cached queries in the cache memory 155. For example, the threshold can be set based on predefined criteria. Alternatively, or in addition, the threshold can be set dynamically based on accuracy testing (e.g., threshold tuning based on real-time performance metrics such as user feedback or reinforcement learning adjustments). In some examples, if the similarity between the cached response and the subsequent query is greater than or equal to the threshold, then the data processing system can determine there is a match. In other examples, other comparison-based determinations can be made.

The chatbot 112 can use the link between the query and the response in the cache memory 155 to service one or more subsequent queries provided to the chatbot 112. For example, the computing system 120 can provide a cached response linked to the matching cached query in response to the subsequent query to the chatbot 112 for presentation via chatbot interface 114. In some implementations, using the link can include retrieving a response by traversing a reference structure stored in cache memory 155. For example, if query-response pairs are stored as structured data objects (e.g., JSON objects) with reference fields, the chatbot 112 can use the stored reference to locate and retrieve the corresponding response. If the cache memory 155 stores query-response pairs using embeddings in a vector space, using the link can include performing a vector similarity search to identify a stored query embedding that has a high similarity score to the received query, retrieving the linked response, and presenting the response via the chatbot interface 114. In some implementations, a matching cached response may not be stored within cache memory 155. Upon failing to determine a matching cached query, the cache retrieval and storage system 150 or cache memory 155 can return a cache miss notification or initiate operations to generate a modeled response to the subsequent query. For example, if a sufficiently similar cached query is not identified, the cache retrieval and storage system 150 can pass the subsequent query to the AI model 130 for response generation.

Internal data objects 165 can include or refer to organizational or verified data used to populate the cache memory 155. For example, internal data objects 165 can include data stored in one or more repositories or data stores managed by or associated with the computing system 120. Internal data objects 165 can include verified or pre-validated content. Verified or pre-validated content can include or refer to data that has been reviewed or analyzed to determine its accuracy, relevance, or adherence to organizational standards. For example, internal data objects 165 can include knowledge base articles, regulatory compliance data, organizational guidelines, or other internal data managed by or associated with computing system 120 or an entity associated with computing system 120. For example, internal data objects 165 can include web pages, organizational FAQs, internal process documentation, proprietary datasets, etc., and combinations thereof. Internal data objects 165 can include various data accessed by the chatbot 112, the computing system 120, the AI model 130, and/or other systems or sub-systems . For example, the computing system 120 can retrieve and model internal data objects 165 to generate query-response pairs for storage in cache memory 155.

External data objects 170 can include or refer to data from public or third-party sources used to populate the cache memory 155. For example, external data objects 170 can include data stored in public databases, third-party repositories, web-based platforms, and the like that are not managed by or directly associated with the computing system 120. External data objects 170 can include unverified or dynamically sourced data that can include or refer to information retrieved from external sources without prior review or validation for accuracy or relevance. For example, external data objects 170 can include publicly available knowledge bases, industry reports, regulatory documents, data from third-party APIs, etc., and a combination thereof. External data objects 170 can further include web-based resources, social media content, publicly accessible datasets, etc., and a combination thereof. External data objects 170 can include various data accessed by the chatbot 112, the computing system 120, the AI model 130, and/or other systems or sub-systems . For example, the computing system 120 can retrieve and model external data objects 170 to generate query-response pairs for storage in cache memory 155.

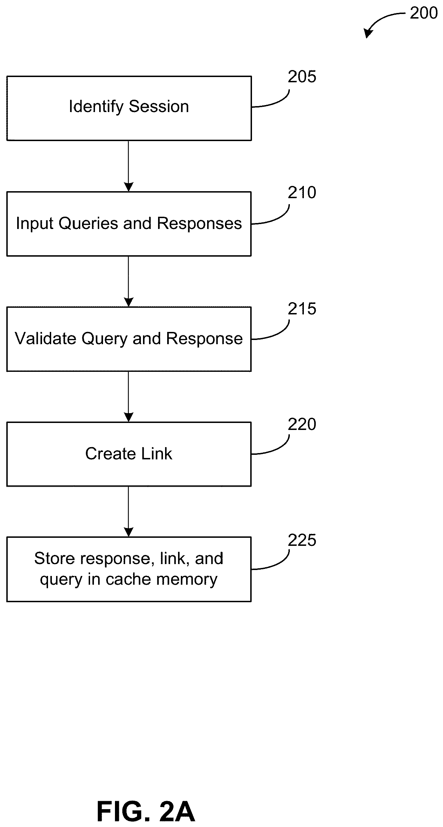

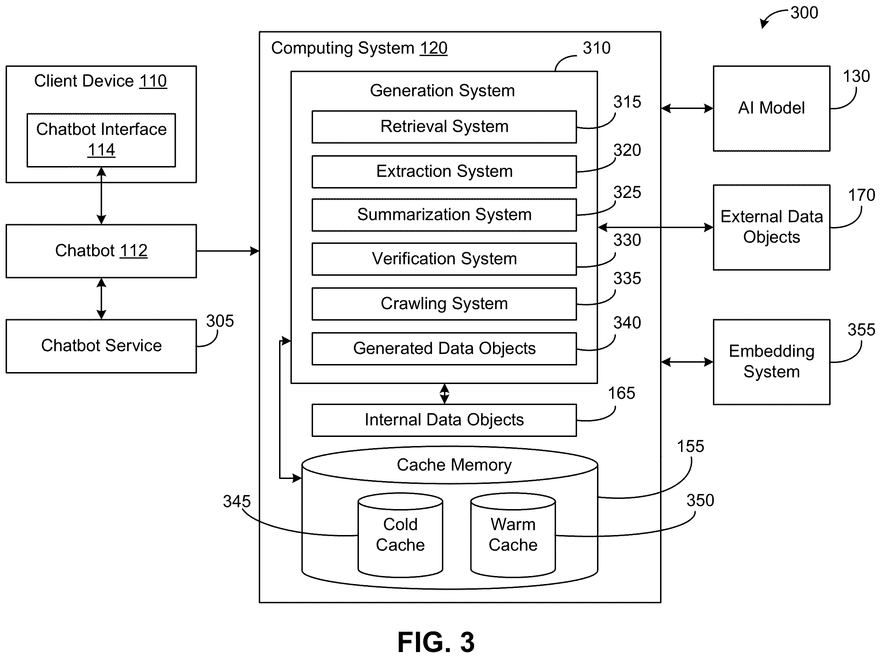

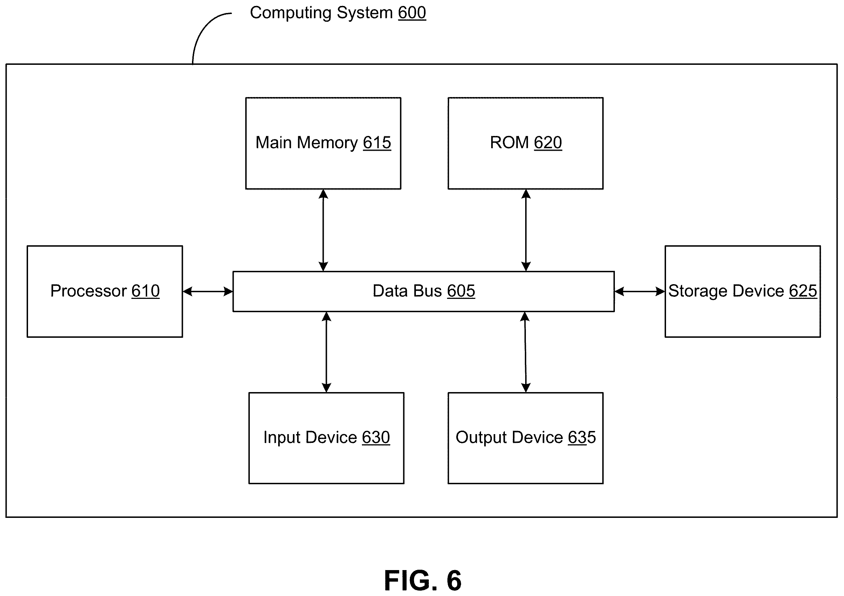

FIGS. 2A-2B shows illustrative examples of a computer-implemented method 200 for machine-learning based dynamic caching for chatbots according to one or more implementations. Method 200 can be implemented using various systems, devices, or components discussed herein (e.g., one or more processors, system 100 or computing system 120 of FIG. 1, system 300 of FIG. 3, system 600 of FIG. 6, etc.). Referring to FIG. 2A, method 200 can include one or more of acts 205-225. Act 205 can include identifying a session. Act 210 can include inputting queries and responses. Act 215 can include validating a query and response. Act 220 can include creating a link. Act 225 can include storing a response, link, and query in a cache memory.

Act 205 can include identifying a session. For example, method 200 can include identifying, by one or more processors coupled with memory, a session between a client device and a chatbot. Identifying a session can include the one or more processors detecting an initial interaction, such as receiving a user query via the chatbot 112, identifying an API call transmitted to the chatbot 112, detecting authentication credentials presented on the chatbot interface 114, recognizing an active chat instance based on a session token, etc. For example, the computing system 120 or chatbot 112 can determine that a session has been initiated based on receiving a query input via chatbot interface 114 and associating the query with a session identifier. In some implementations, identifying a session can include tracking session context by maintaining metadata of the session (e.g., timestamp of session initiation or termination, session duration, session-specific user preferences, etc.). Identifying a session can further include monitoring session activity to determine whether the session remains active based on user interactions. For example, the one or more processors can apply a session timeout condition to terminate the session if no user input is received within a predefined time threshold. Upon, responsive to, or subsequent to identifying a session, the one or more processors can retrieve or aggregate previously exchanged queries and responses associated with the session (e.g., a chat history or session history).

Act 210 can include inputting queries and responses. For example, method 200 can include inputting, by the one or more processors, into a generative artificial intelligence model, one or more queries and one or more corresponding responses from the session to construct a query and a response that, together, represent the one or more queries and the one or more corresponding responses from the session. Inputting can include the computing system 120 applying preprocessing techniques (e.g., stop-word removal, lemmatization, normalization of variations in phrasing, etc.) to refine the session data before processing by the AI model 130. For example, the one or more processors can standardize terminology across multiple variations of user queries and chatbot responses and maintain a semantic meaning or context represented by multiples exchanges within the session. In some implementations, the one or more processors can provide metadata (e.g., timestamps, session context, user intent classification) as input to the generative artificial intelligence model to provide context for query-response construction. Inputting can also include the one or more processors structuring session data for model inference by encoding textual queries and responses into a standardized format. For example, the computing system 120 extract user queries and chatbot responses exchange during the session, process the extracted session data, and generate an input embedding that captures linguistic and contextual attributes of the session data. In some implementations, inputting queries and responses can include providing a full or partial sequence of user queries and chatbot responses from the session as raw input into the generative artificial intelligence model. Inputting can further include transmitting a prompt corresponding with the session data, as further described herein. In response to the input, the AI model 130 can generate cacheable queries or cacheable responses configured for storage in cache memory 155.

Act 215 can include validating a query and response. For example, method 200 can include validating, by the one or more processors, the query and the response, constructed by the generative artificial intelligence model, based on a comparison of the query and the response with an expression of a first schema model established for a type of data field in the query and the response. Validating can include the computing system 120 analyzing structural and semantic elements of the cacheable query and cacheable response to determine alignment with the schema model 140. For example, the one or more processors can compare the format of data fields (e.g., timestamps, numerical values, categorical labels) in the query and response to predefined patterns or constraints established in the schema model. For example, if a query or response includes a field expected to include a date, the one or more processors can verify that the data in the field matches a valid date format (e.g., YYYY-MM-DD) defined by an expression of the schema before storage of the query or response in cache memory 155. In some implementations, validating can include applying rule-based checks or probabilistic models established for one or more data fields of the query or response to assess consistency, accuracy, format, style, or other such features of the query or response. For example, the one or more processors can determine whether a query classified under a specific intent (e.g., requesting numerical data) corresponds with a response containing a numerical value rather than a free-text answer. The one or more processors can also apply token-based validation techniques to detect, for example, missing, redundant, or incorrectly formatted content in the response based on formatting expressions included in the schema model. The one or more processors can apply dependency-based validation to verify whether a response satisfies predefined constraints (e.g., if a response contains an amount in a specified currency, the system can confirm that the currency code is also present). If validation conditions are met at act 2125, the validated query-response pair can be transmitted for further processing or storage. If validation fails (e.g., returns a failure notification or other indication of an operational error failure), the one or more processors can generate a validation error or flag the query or response for review.

Act 220 can include creating a link. For example, method 200 can include creating, by the one or more processors, a link between the query and the response. Creating a link can include the computing system 120 generating an association between the validated cacheable query and cacheable response in a structured format to provide fast access and retrieval for the chatbot 112. For example, the one or more processors can create an identifier or hash-based key corresponding to a query or response and store the identifier in a structured data object associated with a corresponding query or response (e.g., JSON object, relational database entry, key-value store record, etc.). In some implementations, the one or more processors can generate and store query-response pairs as embeddings in a vector space and linking can include mapping a query vector with a response vector in the vector space based on similarity metrics (e.g., cosine similarity, Euclidean distance, etc.). In some implementations, creating a link can include the computing system 120 generating a reference structure (e.g., a directed graph or an index) and encoding query-response associations into the reference structure such that each query node is linked to a corresponding response node via an edge containing metadata (e.g., creation timestamp, confidence score, access frequency). For example, the one or more processors can generate reference data for storage in a retrieval index (e.g., cache memory 155), in which linked query-response pairs can be accessed through structured queries or search operations on the indexed data. For example, creating a link can include associating a query and response such that an input to the chatbot can trigger a retrieval operation that follows the generated link to identify and provide an associated response from cache memory 155.

Act 225 can include storing a response, link, and query in a cache memory. For example, method 200 can include storing, by the one or more processors, responsive to the validation of the query and the response, the link, the query, and the response in a cache memory, and the chatbot can use the link in the cache memory to service one or more subsequent queries provided to the chatbot. Storing can include the computing system 120 writing query-response pairs to a data store (e.g., cache memory 155) in various structured formats including, for example, a structured data object (e.g., JSON), an indexed entry in a retrieval system, or an embedding representation stored in a vector database. For example, the one or more processors can organize cached data using indexing techniques (e.g., hash-based indexing, tree-based indexing, or vector quantization). In some implementations, storing can include the one or more processors applying cache retention policies to improve memory usage. For example, the one or more processors can store frequently accessed query-response pairs in a high-speed memory (e.g., static random-access memory (SRAM) or dynamic random-access memory (DRAM)), while less frequently accessed pairs are stored in lower-tier storage (e.g., solid-state drive (SSD) or cloud storage). The one or more processors can execute smart caching techniques (e.g., cache eviction or retention instructions) to dynamically manage stored entries and remove outdated or infrequently accessed data. Upon storing the response, link, and query in cache memory 155, the chatbot 112 can access and retrieve stored responses by executing structured queries or similarity searches. For example, if a subsequent query matches a stored query based on predefined similarity thresholds, the chatbot 112 can retrieve the corresponding cached response and bypass additional computation. In some implementations, the one or more processors can update stored query-response pairs based on newly received user interactions or external data sources such that cached responses are verified as accurate and contextually relevant.

The method 200 can include identifying, by the one or more processors, using the cache memory, a cached query of the cache memory that matches the one or more subsequent queries. Identifying a cached query can include the computing system 120 executing a semantic search or similarity search across stored query embeddings or applying structured search techniques based on indexed representations stored with cache memory 155. For example, the one or more processors can determine a subsequent query is semantically similar to a cached query by generating one or more similarity metrics (e.g., cosine similarity, Euclidean distance, or Jaccard similarity) for a plurality of cached queries in the cache memory 155 and comparing the one or more similarity metrics to a predefined threshold (e.g., a similarity score exceeding 0.85 on a scale of 0 to 1). In some implementations, the one or more processors can apply approximate nearest neighbor (ANN) search techniques (e.g., locality-sensitive hashing (LSH) to map high-dimensional embeddings into hash buckets for efficient retrieval, k-d trees for organizing query embeddings based on spatial partitioning, HNSW indexing to accelerate nearest-neighbor search using hierarchical graph-based structures, or other such techniques) to retrieve cached queries with high similarity scores relative to similarity scores between other cached queries and the subsequent query.

The method 200 can include determining, by the one or more processors, using the link in the cache memory, a cached response that is linked with the cached query. Determining a cached response can include following references or links (e.g., identifiers, storage addresses, etc.) stored in association with a cached query in cache memory 155 and retrieving a corresponding response based on the reference or link. For example, if query-response pairs are stored as structured data objects, the one or more processors can locate the response by traversing a retrieval index or accessing linked references or storage addresses. In some implementations, when multiple query-response pairs exhibit a similarity score exceeding a predefined threshold, determining a cached response can include executing a weighted ranking function to generate a ranking of a subset of cached queries corresponding with the subsequent query, selecting a highest-ranked query from the subset based on the ranking, and providing a corresponding cached response linked with the selected query.

The method 200 can include providing, by the one or more processors, from the cache memory, responsive to determination of the cached response, the cached response to the chatbot to cause the chatbot to perform an operation using the cached response. Providing the cached response can include formatting and transmitting the retrieved response to the chatbot interface 114 to cause the chatbot interface 114 to display the response or to cause the chatbot 112 to perform further processing. For example, the one or more processors can generate an output representation of the cached response by structuring the retrieved response as a text message, a selectable option, a dynamically formatted answer, an interactive element (e.g., a follow-up query suggestion), or the like. In some implementations, providing the cached response can include appending metadata to the response (e.g., a confidence score, retrieval timestamp, or cache source identifier). If no suitable cached response is identified or if the confidence score of all retrieved response fail to satisfy a threshold, the one or more processors can trigger response generation using the generative artificial intelligence model 130, as further described herein. For example, providing can include the chatbot 112 displaying an interim prompt to the user indicating that the requested information is being generated or retrieved from external sources.

The cache memory used in method 200 can include a warm cache and a cold cache. The warm cache can include a first plurality of cached queries linked with corresponding cached responses, and the first plurality of cached queries can be pre-verified. For example, the one or more processors can retrieve content from internal or external data sources including, for example, documents, data objects, web content, or other data. For example, the one or more processors can input the retrieved content into the generative artificial intelligence model 130. The generative artificial intelligence model 130 can process the retrieved content to model and generate one or more query-response pairs based on, for example, linguistic patterns, contextual relationships, inferred user intent, or other such information detected in the retrieved content. The one or more processors can repeat one or more steps of method 200 (e.g., acts 210-225) to construct and validate the first plurality of queries and responses before storage in the warm cache. Validating the generated queries and responses can include using the schema model 140 to verify, for example, formatting, accuracy, reliability, or other such information of the generated query and response pairs. The warm cache can provide low-latency access to query-response pairs that have been verified as accurate or reliable. The warm cache can store validated responses in high-speed memory (e.g., SRAM, DRAM) to improve retrieval speed, and the chatbot 112 or computing system 120 can prioritize retrieving responses from the warm cache to reduce processing loads and prevent redundant operations (e.g., reverification of pre-verified content).

The cold cache can include a second plurality of cached queries linked with corresponding responses, and the second plurality of cached queries can be unverified. For example, the one or more processors can generate query-response pairs dynamically in response to user interactions or retrieving content from unverified external sources (e.g., publicly available web pages, third-party APIs, unstructured data repositories, or user-generated content). The one or more processors can store the unverified query-response pairs in the cold cache for the chatbot 112 to provide provisional responses when no verified match is available in the warm cache. In some implementations, the one or more processors can perform smart caching by updating (e.g., adding, removing, modifying, etc.) query-response pairs stored in the warm cache or the cold cache based on, for example, usage patterns, retrieval frequency, confidence scoring, or the like. For example, smart caching can include determining a query-response pair from the cold cache is retrieved a predefined number of times or exceeds a usage threshold, validating the query-response pair (e.g., using a schema model), or promoting the query-response pair to the warm cache for storage. Smart caching can further include the one or more processors demoting a query-response pair from the warm cache to the cold cache based on retrieval patterns, usage data, or other metrics (e.g., user feedback).

The cache memory used in method 200 can include a plurality of links between respective pairs of queries and responses. For example, the one or more processors can establish structured associations between queries and responses using reference pointers, hash mappings, index structures, or the like. Linking query-response pairs can include the one or more processors generating metadata-based associations or embeddings (e.g., timestamps, confidence scores, semantic similarity metrics, etc.) to improve search accuracy and retrieval efficiency. The cache memory used in method 200 can provide fast access to the chatbot. For example, the cache memory 155 can provide fast access to the chatbot 112 by retrieving or providing a pre-verified response to the chatbot 112 to reduce latency, perceived latency, or resource load associated with response generation. For example, the one or more processors can use smart caching in cache memory 155 to prioritize query-response pairs based on verification status, retrieval frequency, contextual relevance (e.g., cold and warm caches), or the like. In some implementations, the one or more processors can dynamically rank, re-rank, or update stored query-response pairs based on, for example, usage patterns, query similarity scores, chatbot interactions, or other such data. Additionally, the one or more processors can periodically update stored data within cache memory 155 (e.g., performing reindexing, compression, or deduplication) to improve lookup efficiency and reduce retrieval latency.

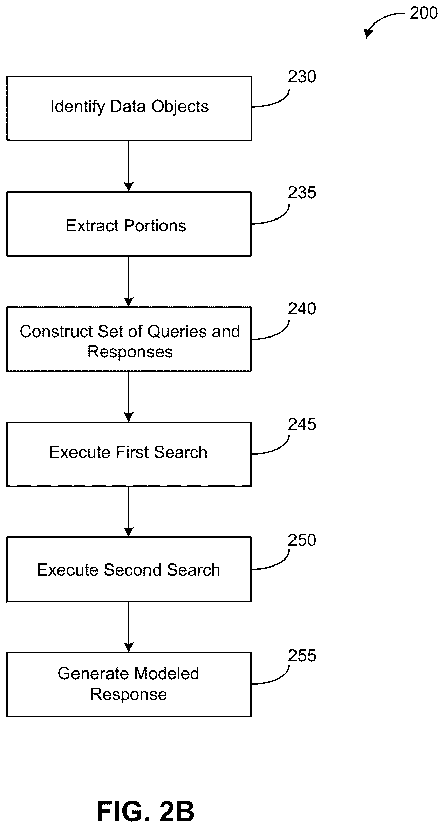

Referring to FIG. 2B, method 200 can include one or more of acts 230-255. Act 230 can include identifying data objects. Act 235 can include extracting portions. Act 240 can include constructing a set of queries and responses. Act 245 can include executing a first search. Act 250 can include executing a second search. Act 255 can include generating a modeled response.

At act 230, the method 200 can include identifying, by the one or more processors, a plurality of data objects including pre-verified data. Identifying can include scanning or crawling internal or external data sources (e.g., internal FAQ pages, structured databases, regulatory documents, technical documentation, or curated datasets) to detect data objects and comparing the data objects to predefined verification criteria. Identifying can include generating data objects by digitizing internal or external documents or file inputs (e.g., scanning or parsing .docx, .excel, .html, or .pdf files) according to a document generation workflow. For example, identifying can include performing schema-based data extraction on inputted documents according to a schema model, creating a summary from the document content, using the summary to generate or curate a question and answer document (e.g., modeled query and response pair), and performing content validation on the curated Q&A document. For example, performing content validation can include comparing the data objects to predefined verification criteria to determine conformity to a predefined schema model, a trusted source designation (e.g., content originating from an authoritative domain or repository), metadata attributes (e.g., certification status, update history, or version control information), contextual attributes (e.g., detected consistency based on cross-referencing retrieved objects with known or validated data objects), or other such attributes. Identifying can also include receiving supplemental data (e.g., curated FAQs, keywords, and/or links) and using the supplemental data to extract and/or summarize content from the data objects.

At act 235, the method 200 can include extracting, by the one or more processors, one or more portions of the pre-verified data from the plurality of data objects using an expression of a second schema model established for a type of data field in the plurality of data objects. For example, extracting can include parsing structured data fields, normalizing extracted values to align with a standardized schema, filtering redundant or irrelevant information based on a schema model configured to a type of the extracted information, or the like. For example, if a regulatory database includes multiple versions of the same compliance guideline, the one or more processors can extract the most recent or authoritative version based on corresponding metadata (e.g., timestamps, reference identifiers, etc.). In some implementations, extracting can include applying schema transformations (e.g., mapping hierarchical data structures to flattened representations, converting numerical values to a standardized unit system, reformatting unstructured text into structured query-response pairs), or performing other such techniques.

At act 240, the method 200 can include constructing, by the one or more processors, using the generative artificial intelligence model, a set of pre-verified queries and responses based on the one or more portions. Constructing can include inputting extracted pre-verified data into the generative artificial intelligence model 130, which can generate structured query-response pairs by modeling linguistic relationships, semantic context, and inferred intent from the extracted data. For example, if the extracted data corresponds to frequently asked technical support queries, the generative artificial intelligence model 130 can generate a set of canonical question-answer pairs formatted for chatbot interaction. In some implementations, constructing pre-verified queries and responses can include ranking generated responses based on, for example, confidence metrics, semantic coherence, contextual relevance, or other such information. For example, the one or more processors can compare AI-generated responses to historical chatbot interactions or predefined reference answers and filter responses that exhibit low contextual alignment. In some implementations, constructing can include synthesizing a set of variations of query-response pairs and selecting at least one variation from the set for storage or output (e.g., using paraphrasing, reformatting, or adjusting phrasing based on predicted user input patterns). The method 200 can include storing, by the one or more processors, the set of pre-verified queries and responses in a warm cache. For example, storing can include writing the pre-verified queries and responses to subset of cache memory 155 in a structured format (e.g., as in indexed object or embedding-based representation).

At act 245, the method 200 can include executing, by the one or more processors, a first search of a warm cache. Executing a first search can include the one or more processors identifying a cached query in a warm cache of cache memory 155 that corresponds to a subsequent query. Identifying a cached query in the warm cache based on execution of the first search can include performing a search operation. For example, the one or more processors can compare the subsequent query to cached queries based on data including, for example, inputted search parameters, associated metadata, or semantic operations (e.g., similarity comparisons). If a corresponding cached query is located in the warm cache, the one or more processors can retrieve the linked response from the warm cache and bypass a search of a cold cache of cache memory 155, which can improve response generation speed for the chatbot 112.

At act 250, the method 200 can include, in response to receipt of a first indication of a failure to locate a cached query via the first search, executing, by the one or more processors, a second search of a cold cache. Executing a second search can include the one or more processors searching a cold cache of cache memory 155 to locate a cached query corresponding to the subsequent query responsive to receipt of a notification or message indicating that the first search was, for example, unsuccessful, caused an error, or failed (e.g., based on identifying the warm cache failing to include or lacking a sufficiently similar response for retrieval). For example, responsive to receipt of the failure indication corresponding to the warm cache search, the one or more processors can execute an additional search including, for example, structured query search, a lexical search, a broader similarity-based search, or other such techniques to retrieve a query-response pair from the cold cache. If a corresponding cached query is located in the cold cache, the one or more processors can retrieve the linked response from the cold cache and bypass real-time response modeling using an AI model, which can improve response generation speed for the chatbot 112 by providing the chatbot 112 with fast access to verified responses for output.

At act 255, the method 200 can include, in response to receipt of a second indication of a failure to locate the cached query via the second search, constructing, by the one or more processors, a modeled response to the one or more subsequent queries using the generative artificial intelligence model. For example, if no corresponding cached query-response pair is identified in either the warm cache or the cold cache, the one or more processors can transmit a search failure notification. Upon, subsequent to, or responsive to receipt of the failure notification, the one or more processors can generate a new response by providing the subsequent query as input to the generative artificial intelligence model 130. In some implementations, constructing the modeled response can include incorporating contextual parameters (e.g., user session history, prior chatbot interactions, or inferred intent classifications) to generate a response that aligns with the prior conversation context within a session. The method 200 can include presenting, by the one or more processors, via the chatbot, the modeled response responsive to the one or more subsequent queries. Presenting can include transmitting the generated response to a chatbot interface 114 for display or further processing. For example, the one or more processors can output the modeled response as a dynamically generated text message, a structured data output, an interactive response (e.g., suggested follow-up queries or chatbot-generated clarification prompts), or other such presentations. In some implementations, presenting the modeled response can include formatting the response based on a response template or display configurations (e.g., (e.g., text length limits, structured response fields, interactive elements such as selectable options or hyperlinks).

The method 200 can include generating, by the one or more processors, a plurality of metrics corresponding with the one or more subsequent queries and a plurality of queries of the cache memory. For example, generating the plurality of metrics can include the computing system 120 calculating query similarity or distance scores, retrieval frequency counts, response confidence levels, contextual relevance indicators, or other such metrics for stored query-response pairs. For example, the one or more processors can determine a similarity metric or distance metric between the subsequent query and a cached query using text-based comparisons, semantic comparisons, embedding-based comparisons, or other such comparison techniques. The method 200 can include determining, by the one or more processors, one or more metrics of the plurality of metrics satisfy at least one threshold. For example, the one or more processors can compare the similarity score to a predefined or dynamically adjusted threshold to determine a cached query sufficiently matches the subsequent query such that a cached response corresponding with cached query can be accurately provided as a response to the subsequent query. In some implementations, one or multiple cached queries can correspond with a subsequent query, and the one or more processors can rank or select at least one of the one or multiple cache queries for output. The method 200 can include identifying, by the one or more processors, based on the one or more metrics satisfying the at least one threshold, at least one cached query of the plurality of queries that matches the one or more subsequent queries. For example, the one or more processors can retrieve a set of candidate cached queries that satisfy the threshold and apply ranking criteria (e.g., retrieval frequency, metadata confidence, or contextual proximity to prior interactions) to determine at least one cached query for selection.

The method 200 can include determining, by the one or more processors, a first metric including a similarity score between an embedding of the one or more subsequent queries and one or more cached embeddings stored in the cache memory. Determining the similarity score can include executing a comparison operation that measures how closely the subsequent query aligns with a cached query based on, for example, structural attributes, semantic attributes, contextual attributes, or other attributes. For example, the one or more processors can apply a similarity function (e.g., cosine similarity, Jaccard similarity, or soft term frequency-inverse document frequency (TF-IDF)) to evaluate lexical or semantic overlap between the subsequent query and cached queries. The method 200 can include determining, by the one or more processors, a second metric including a distance score between the embedding and the one or more cached embeddings. Determining the distance score can include computing a measure of divergence or dissimilarity between the subsequent query and cached queries, where lower distance scores indicate higher relevance. For example, the one or more processors can calculate Euclidean distance, Manhattan distance, Wasserstein distance, or other metrics in a high-dimension embedding space representing linguistic or contextual relationships between queries. In some implementations, the one or more processors can apply hierarchical clustering or centroid-based techniques (e.g., k-means clustering) to determine a representative distance score for groups of related queries.

The method 200 can include determining, by the one or more processors, that a subject of the one or more subsequent queries corresponds with at least one of a location or jurisdiction. Determining the subject can include, for example, extracting keywords, named entities, structured parameters, or other data from the subsequent query and cross-referencing the extracted data with predefined location-based or jurisdictional identifiers. For example, the one or more processors can apply natural language processing (NLP) techniques (e.g., named entity recognition (NER), regular expression matching, or knowledge graph lookups) to identify geographic terms, regulatory references, jurisdictional entities, or other such information within the query. A location can include or refer to a geographic region including, for example, a country, state, province, city, district, or other defined area associated with legal, regulatory, or policy-based distinctions. For example, a location can include national boundaries (e.g., "United States," "European Union"), subnational divisions (e.g., "California," "Quebec"), or more granular areas such as metropolitan zones, local municipalities, or designated economic regions (e.g., "Silicon Valley" or a "Special Administrative Region"). A jurisdiction can include or refer to, for example, a legal, regulatory, or governmental authority that governs specific laws, policies, or regulations applicable to an entity, person, or transaction within a location. For example, a jurisdiction can include national or federal legal systems (e.g., "United States federal law," "European Court of Justice"), state or provincial legal frameworks (e.g., "Texas labor law," "Ontario contract law"), or industry-specific regulatory bodies with defined enforcement powers (e.g., "Financial Conduct Authority (FCA)," "Food and Drug Administration (FDA)").

The method 200 can include selecting, by the one or more processors, a vector model of a plurality of vector models based on the subject. For example, selecting a vector model can include determining an appropriate pre-trained model for encoding the subsequent query based on the detected subject, domain relevance, jurisdictional constraints, or other such data. For example, if the query references a U.S. state-specific regulation, the one or more processors can select a vector model trained on legal terminology and compliance documents corresponding with the state. For example, a subsequent query can include "What is the minimum wage in California?," and the one or more processors can select a vector model trained on legal terminology and compliance documents corresponding with California. The method 200 can include generating, by the one or more processors, using the selected vector model, an embedding of the one or more subsequent queries. Generating the embedding can include encoding the query into a high-dimensional vector representation that captures semantic and contextual meaning. For example, the one or more processors can apply a transformer-based model (e.g., Bidirectional Encoder Representations from Transformers (BERT), Sentence-BERT (SBERT), or a jurisdiction-specific large language model) to generate an embedding that aligns with the selected domain.

The method 200 can include pre-filtering, by the one or more processors, a plurality of vector models based on a subject of the one or more subsequent queries. Pre-filtering can include identify one or a subset of candidate vector models from a plurality of available models based on selection criteria (e.g., model training domain, geographic or jurisdictional scope, model architecture, etc.). For example, the one or more processors can pre-filter vector models by identifying that a subsequent query pertains to labor laws in a specific jurisdiction and restricting a selection of a model used to generate a response to the subsequent query to one or more vector models trained on legal and regulatory data within that jurisdiction. In some implementations, pre-filtering can include excluding vector models that lack domain-specific training or models with confidence thresholds below a predefined accuracy level. The method 200 can include selecting, by the one or more processors, a vector model based on a subject of the one or more subsequent queries corresponding with at least one of a location or jurisdiction. Selecting the vector model can include determining a pre-filtered model based on, for example, a relevance of training data, parameterization, domain alignment with the subsequent query, or other such information. For example, if the subsequent query relates to European Union financial regulations, the one or more processors can select a vector model trained on EU-specific legal texts and financial policies.

At least one (e.g., each) vector model of the plurality of vector models can be trained using a dataset corresponding with the at least one of the location or jurisdiction. Training can include the one or more processors initializing the vector model (e.g., AI model 130) with a neural network architecture configured to process textual input and adjust internal parameters (e.g., weights, biases) based on domain-specific training data. A vector model can include a neural network architecture including a set of interconnected computational units, referred to as nodes or artificial neurons, organized into layers. One or more nodes of the model can receive input, apply a transformation based on weighted parameters (e.g., edge weights connecting nodes), and produce an output that serves as input to subsequent layers in the network. For example, training can include propagating training data (e.g., legal texts, regulatory documents, industry guidelines) through multiple layers of nodes, where each node applies a weighted sum operation to its inputs and processes the result using an activation function. An activation function can include a mathematical function that determines the output of a node based on its weighted input and allows the model to learn patterns (e.g., rectified linear unit (ReLU), a sigmoid function, softmax function, etc.). Training the vector model can include determining or executing cost function to quantifies the accuracy of predictions of the model relative to expected outputs. For example, the one or more processors can apply a cost function (e.g., cross-entropy loss, mean squared error) to determine or measure a difference between predicted and actual values and iteratively adjust parameters of the AI model to minimize the difference. In some implementations, training can include the one or more processors causing the vector model to execute a backpropagation algorithm to calculate gradients of the cost function with respect to model parameters and a gradient descent algorithm (e.g., stochastic gradient descent (SGD), Adam optimization) to update the weights or biases of the model iteratively and reduce output error over successive iterations.

The method 200 can include generating, by the one or more processors, using the selected vector model, an embedding of the one or more subsequent queries. Generating the embedding can include processing the subsequent query using the trained vector model to produce an n-dimensional representation that encodes semantic relationships between query terms and domain-specific concepts based on learned parameters of the vector model. For example, the one or more processors can transform the subsequent query into a continuous-valued vector representation in an embedding space in which similarity between queries is determined based on proximity in the embedding space (e.g., such that queries with closely related meanings exhibit higher similarity scores and dissimilar queries exhibit greater distance). The chatbot can use the embedding to service the one or more subsequent queries provided to the chatbot. For example, the computing system 120 can compare the generated embedding to stored embeddings of cached queries in cache memory 155 by executing a semantic search operation on cache memory 155 using the generated embedding and determining a cached query that matches a query received by the chatbot 112. If a corresponding cached query is identified, the computing system 120 can retrieve and transmit the linked response to the chatbot 112 for output.

Inputting the one or more queries and corresponding responses at act 210 can include generating, by the one or more processors, a prompt corresponding to a to a subject of the one or more queries and the one or more corresponding responses from the session. Generating the prompt can include constructing a structured input format that guides the generative artificial intelligence model 130 in formulating a response that aligns with, for example, a domain, context, or intent identified from the one or more subsequent queries. For example, the computing system 120 can generate a prompt including context-based instructions, expected values or fields, formatting constraints, or other such information within the prompt to refine output of the AI model 130 for storage in cache memory 155. In some implementations, generating the prompt can include dynamically adjusting prompt parameters based on metadata associated with the session (e.g., conversation history, user role, or prior chatbot interactions). The one or more processors can encode constraints including, for example, a required (or predefined) response length, predefined answer structures, or confidence thresholds into the prompt template to instruct the model during response generation. Inputting the one or more queries and corresponding responses at act 210 can include providing, by the one or more processors, the prompt to the generative artificial intelligence model. Providing the prompt can include transmitting a request or an API call to AI model 130 and retrieving a generated response from the AI model 130 for output via the chatbot interface 114.

Validating the query and the response at act 210 can include identifying, by the one or more processors, in the query and the response, a plurality of fields corresponding to the first schema model, and the first schema model can include a regular expression and a data type for at least one (e.g., each) field. A regular expression or regex can include a structured sequence of characters defining a pattern used by the one or more processors to verify that a field within the query or response conforms to an expected format. For example, a regex can be applied to validate whether a field includes a date formatted as YYYY-MM-DD using a pattern such as "\d{4}-\d{2}-\d{2}". In this example, the regular expressions can be used to validate that the first segment consists of four numeric digits representing a year, followed by a hyphen, two numeric digits representing a month, another hyphen, and two numeric digits representing a day. For example, a regex such as "^\$\d+(\.\d{2})?$" can be applied to validate monetary values formatted in U.S. currency, where the pattern verifies that the field starts with a dollar sign, is followed by at least one digit, and optionally includes a decimal point followed by two digits. In another example, a regex such as "\b[A-Z]{2,}\b" can be applied to detect uppercase abbreviations (e.g., country codes, legal entity identifiers) and verify that a corresponding field value includes of at least two consecutive uppercase letters and is bounded by word boundaries to prevent partial matches within a larger string.

Validating the query and the response at act 210 can include determining, by the one or more processors, based on an application of the regular expression, contents of the plurality of fields match an expected pattern of at least one (e.g., each) data type. For example, the one or more processors can verify that extracted numerical values conform to integer or floating-point constraints, that text-based fields adhere to predefined capitalization or syntax rules, or that structured identifiers match expected formats. In some implementations, validation can include using a Pydantic model or another data validation framework to verify integrity or accuracy of outputs based on constraints including, for example, expected or required field presence, length limits, range validations, or other such information for storage in cache memory 155 (e.g., in a warm cache).

FIG. 3 is an illustrative example of a system 300 for dynamic caching for chatbots using machine learning, in accordance with some implementations. The system 300 can include client device 110, which can interface with or execute chatbot 112 to provide and receive queries or responses. Chatbot 112 can include or interface with a chatbot service 305. The chatbot service 305 can include or refer to a conversational computing platform which processes natural language inputs, executes contextual modeling techniques, and generates responsive outputs based on a combination of pre-trained models and application-specific data. The chatbot 112 can provide data corresponding to a chatbot conversation received via chatbot interface 114 to computing system 120 via a network (e.g., network 105). Each of the systems, sub-systems, or modules herein can refer to or include one or more processors coupled with memory (e.g., as shown on FIG. 6).

The system 300 can include computing system 120. For example, computing system 120 can include or refer to dynamic AI-based caching architecture including various systems, subsystems, services, microservices, or modules. The computing system 120 can include or interface with a generation system 310. For example, the generation system 310 can include any combination of hardware and software to retrieve data objects, generate structured objects (e.g., query-response pairs), or store data for subsequent cache operations. For example, the generation system 310 can include a retrieval system 315, an extraction system 320, a summarization system 325, a verification system 330, a crawling system 335, and generated data objects 340. The generation system 310 can also access or interface with chatbot 112, AI model 130, cache memory 155, internal data objects 165, external data objects 170, and embedding system 355. The cache memory 155 can include a warm cache 345 and a cold cache 350.

The retrieval system 315 or crawling system 335 can obtain and process data objects from internal data objects 165 and external data objects 170 for chatbot response generation and caching. For example, the retrieval system 315 can execute structured queries, API requests, or search operations to retrieve internal or external data objects from unstructured, structured, or semi-structured data sources. For example, the retrieval system 315 can identify previously stored chatbot interactions, enterprise knowledge bases, organizational datasets, or other such data. For example, the retrieval system 315 can query internal data objects 165, such as historical chatbot logs, customer support records, or organization-specific FAQs, to identify stored responses relevant to a received chatbot query. The crawling system 335 can scan or index data from sources including, for example, unstructured, semi-structured, or structured data from internal or external sources to identify content for cache storage. Crawling can include, for example, parsing web pages, scraping document repositories, or accessing third-party APIs to collect new or updated content. For example, the crawling system 335 can scan external data objects 170, such as regulatory bulletins, news articles, open-access technical papers, or other data objects and extract relevant segments for structuring into query-response pairs. The crawling system 335 can apply, for example, heuristic filters, keyword-based matching, machine learning-based classification, or other such techniques to identify external content that is relevant to chatbot operations and can pass the extracted data to downstream processing systems (e.g., extraction system 320 or summarization system 325).

The extraction system 320 can process retrieved or crawled data objects to extract information for chatbot query-response generation and caching. For example, extraction can include identifying and isolating relevant text segments, phrases or terms, metadata, or other such data from structured, semi-structured, or unstructured data sources (e.g., one or more of internal data objects 165 and external data objects 170). For example, the extraction system 320 can process documents, logs, or web content to extract definitions, factual statements, procedural steps, or other structured information that can be used to construct query-response pairs. The extraction system 320 can apply natural language processing (NLP) techniques, statistical methods, or machine learning models to determine relevant content from one or more digitized documents. For example, the extraction system 320 can use topic modeling, named entity recognition (NER), text classification models, or other such techniques to identify sections of a document or file containing high-relevance information. In some implementations, the extraction system 320 can segment large text bodies into smaller components, filter redundant or extraneous information, and structure extracted content for downstream processing by the summarization system 325 or verification system 330.

The summarization system 325 can process extracted information to generate structured query-response pairs for chatbot query handling or caching. Summarization can include condensing extracted content into concise, structured representations configured for use with chatbot or semantic cache. For example, the summarization system 325 can generate a query-response pair by analyzing a procedural document into a direct question-and-answer format configured for chatbot retrieval. The summarization system 325 can apply extractive or abstractive summarization techniques, including natural language processing (NLP) models, rule-based methods, machine learning-based summarization algorithms, or other techniques. In some implementations, the summarization system 325 can include or interface with AI model 130 to generate summaries. For example, the summarization system 325 can generate or refine retrieved or extracted data objects by applying or using a large language model to improve fluency, remove redundant information, or adapt phrasing for chatbot interactions. The summarized query-response pairs can be structured for validation and storage in cache memory 155. For example, the summarization system 325 or AI model 130 can interface with embedding system 355 to generate a vector embedding of summarized session data for storage in cache memory 155.

The verification system 330 can verify or validate summarized session data (e.g., one or more query-response pairs) for storage in cache memory 155. For example, the verification system 330 can include similar features or functionality as described regarding the validation system 135 or schema model 140 of FIG. 1, or additional features or functionality. For example, the verification system 330 can apply a schema model to determine whether a generated query-response pair conforms to data including, for example, predefined data formats, response structures, or expected content patterns. The verification system 330 can compare generated responses to reference datasets using similarity metrics, distance metrics, rule-based checks, or other such techniques. In some implementations, the verification system 330 can process responses using AI model 130 to analyze semantic consistency or identify potential anomalies. The verification system 330 can verify a portion of retrieved data objects for storage in warm cache 345 and maintain an unverified portion of retrieved data objects for storage in the cold cache 350.

The generated data objects 340 can include structured query-response pairs formatted for chatbot retrieval and caching. Generated data objects 340 can include, for example, one or more of query data, response data, associated metadata, attributes, or other such data. For example, a generated data object 340 can include a query stored with a corresponding response in a structured format, such as a JSON object containing both the query and response. For example, generated data objects 340 can include first and second JSON objects, with the first object (e.g., query object) referencing the second object (e.g., response object) via data including, for example, a link, address, identifier, or other such information of the second object. In some implementations, generated data objects 340 can be stored as textual representations or as embeddings generated via the embedding system 355 or AI model 130. The embeddings of generated data objects 340 can represent semantic relationships between queries and responses to facilitate similarity-based retrieval (e.g., semantic caching). Metadata associated with generated data objects 340 can include data including, for example, timestamps, retrieval frequency, confidence scores, or source identifiers. In some implementations, generated data objects 340 can be indexed for retrieval using hash-based mappings, database references, vector-based search techniques, or other such techniques.

The warm cache 345 can store query-response pairs (e.g., one or more generated data objects 340) that have been verified based on, for example, accuracy, formatting, contextual relevance, or the like. Query-response pairs stored in the warm cache 345 can be prioritized for retrieval due to a corresponding validation status. The warm cache 345 can include high-speed memory or indexed data structures configured for fast lookup or retrieval. For example, the warm cache 345 can store validated query-response pairs in a data source including, for example, an in-memory database, key-value store, indexed retrieval system, or other data source configured to support low-latency chatbot operations. In some implementations, the warm cache 345 can be dynamically updated as verification system 330 processes retrieved or generated data objects. For example, if query-response pairs stored in cold cache 350 exceed a retrieval threshold, the verification system 330 can process and validate the frequently accessed pairs and promote the pairs to warm cache 345 for access or retrieval.

The cold cache 350 can store retrieved or generated query-response pairs that may be unverified for accuracy or relevance. For example, the cold cache 350 can store data including, for example, query-response pairs generated from external sources, newly retrieved data objects, responses, or other such data generated using AI model 130 that have not been processed by verification system 330. Query-response pairs stored in the cold cache 350 can be associated with metadata including, for example, retrieval frequency, confidence scores, timestamps, or other such metadata. In some implementations, the cold cache 350 can include query-response pairs stored in lower-tier storage or indexed structures configured for retrieval when no corresponding query-response pair is available in warm cache 345. The cold cache 350 can maintain embeddings of stored query-response pairs to facilitate similarity-based search operations or retrieval. In some implementations, query-response pairs stored in cold cache 350 can be, for example, processed for validation, updated with additional information, or added or removed based on retrieval patterns.

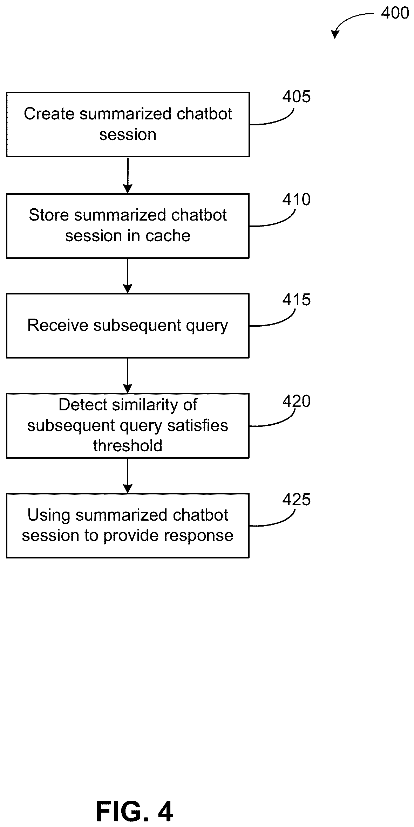

FIG. 4 is an illustrative example of a computer-implemented method for summarizing, storing, and using session data for chatbots, in accordance with some implementations. Method 400 can be implemented using various systems, devices, or components discussed herein (e.g., one or more processors, system 100 or computing system 120 of FIG. 1, system 300 of FIG. 3, system 600 of FIG. 6, etc.). Method 400 can include one or more of acts 405-425. Act 405 can include creating a summarizing chatbot session. Act 410 can include storing the summarized chatbot session in a cache. Act 415 can include receiving a subsequent query. Act 420 can include detecting that a similarity of the subsequent query satisfies a threshold. Act 425 can include using the summarized chatbot session to provide a response.

Act 405 can include creating a summarizing chatbot session. Creating a summarized chatbot session can include the computing system 120 determining that one or more sessions are completed, processing chatbot interactions, extracting relevant portions, and structuring the extracted content into a condensed or representative query and response pairs for caching (e.g., storage and retrieval of verified chatbot responses based on similarity modeling). The computing system 120 can analyze prior chatbot exchanges to identify data including, for example, relevant query-response pairs, user intent indicators, contextual data, or other such information associated with multiple (e.g., several) chatbot sessions. For example, the computing system 120 can use an AI model (e.g., LLM) to apply text segmentation, phrase extraction, sentence compression, and other techniques to generate a structured session summary of one or a group of chatbot sessions. In some implementations, AI model 130 can refine the summarized content by paraphrasing queries or responses, improving coherence, reducing errors and/or inaccuracies, applying formatting adjustments to facilitate subsequent similarity-based retrieval operations, and other such summarizing operations.

Act 410 can include storing the summarized chatbot session in a cache. Storing the summarized chatbot session can include the computing system 120 writing query-response pairs generated in act 405 to a cache memory. The computing system 120 can store the summarized chatbot session in one or more caching layers based on verification status, retrieval frequency, similarity metrics, or other such data. For example, if the summarized session has been validated for accuracy and formatting, the computing system 120 can store the session data (e.g., generated query-response pairs) in a warm cache for prioritized retrieval. If the summarized session has not been verified, the computing system 120 can store the session in a cold cache until a validation process occurs. The summarized chatbot session can be stored as structured objects, text-based records, vector embeddings, or the like in the cache memory.

Act 415 can include receiving a subsequent query. Receiving a subsequent query can include the computing system 120 detecting a new query input from a user via a chatbot interface. The subsequent query can be an initial inquiry or follow-up related to a previous chatbot conversation. The computing system 120 can process the received query by, for example, capturing query text, parsing structured or unstructured input, associating the query with a chatbot session, or using other such techniques. The data processing system can use the subsequent query to identify cached session data corresponding with the subsequent query in response to receipt of the subsequent query. For example, the computing system 120 can determine that the subsequent query corresponds with previously stored chatbot session data in cache memory 155.

Act 420 can include detecting that a similarity of the subsequent query satisfies a threshold. Detecting similarity can include the computing system 120 comparing the subsequent query to cached chatbot session data to determine if a relevant cached response exists in the cache. The computing system 120 can compute similarity metrics between the subsequent query and previously stored queries in cache memory using one or more comparison techniques. For example, the computing system 120 can generate a vector representation of the subsequent query and compare the vector representation to a cached embedding of the session data to generate similarity or distance metrics. The computing system 120 can further compare the computed similarity or distance metric to a predefined or dynamically adjusted threshold to determine whether the subsequent query sufficiently corresponds with a stored session summary. Upon, subsequent to, or responsive to determining the similarity metric meets or exceeds the threshold, the computing system 120 can identify the summarized chatbot session as relevant and retrieve the associated session data for use in response generation.

Act 425 can include using the summarized chatbot session to provide a response. Using the summarized chatbot session to provide a response can include the computing system 120 identifying session data stored in cache memory 155 and retrieving at least a portion of the session data in response to determining the similarity of the subsequent query satisfies the threshold at act 410. The computing system 120 can retrieve the summarized session data from cache memory 155 and use at least a portion of the session data to provide a response to the subsequent query. The retrieved session data can include a textual summary of information including, for example, a consolidated chatbot session, generated query-response pairs, contextual information, or other such data. The computing system 120 can process the retrieved session data to identify or generate a response to the subsequent query and transmit the response to the chatbot interface 114 for output (e.g., using a graphical user interface).

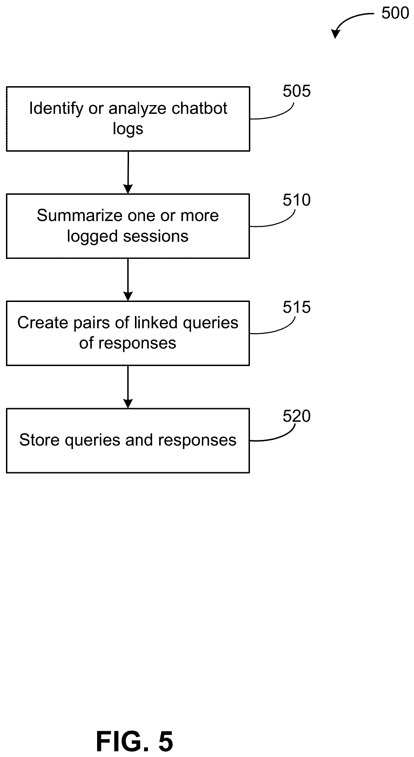

FIG. 5 is an illustrative example of a computer-implemented method for post-processing and caching for chatbots, in accordance with some implementations. Method 500 can be implemented using various systems, devices, or components discussed herein (e.g., one or more processors, system 100 or computing system 120 of FIG. 1, system 300 of FIG. 3, system 600 of FIG. 6, etc.). Method 500 can include one or more of acts 505-520. Act 505 can include identifying or analyzing chatbot logs. Act 510 can include summarizing one or more logged sessions. Act 515 can include creating pairs of linked queries and responses. Act 520 can include storing queries and responses.

Act 505 can include identifying or analyzing chatbot logs. Identifying chatbot logs can include the computing system 120 retrieving data including, for example, stored conversation records, session transcripts, message logs, or other such information generated from chatbot interactions at a scheduled time or predetermined interval (e.g., weekly, daily, hourly, etc.). For example, the computing system 120 can access chatbot logs stored in structured or unstructured formats, including accessing text-based transcripts, database records, indexed data objects, or other such data. The chatbot logs can include user queries, chatbot responses, timestamps, session identifiers, metadata, or other such data describing interaction context (e.g., user role, conversation history, device type). The computing system 120 can process chatbot logs by parsing stored records, extracting structured data, and associating logged queries with corresponding responses. In some implementations, analyzing chatbot logs can include categorizing interactions based on data including, for example, detected topics, conversation structure, session metadata, or other such information to facilitate query-response generation and caching.

Act 510 can include summarizing one or more logged sessions. Summarizing logged sessions can include the computing system 120 processing chatbot logs to generate structured summaries for caching and retrieval during post-processing. The computing system 120 can extract relevant portions of chatbot interactions, remove redundant information, and generate condensed representations of user queries and chatbot responses from the logged session data. Summarizing can include segmenting long interactions into discrete exchanges, filtering redundant or low-relevance content, normalizing variations in phrasing, or other such techniques. The computing system 120 can apply natural language processing (NLP) models, rule-based heuristics, statistical techniques, or other such techniques to generate structured representations of logged chatbot conversations.

Act 515 can include creating pairs of linked queries and responses. Creating pairs of linked queries and responses can include the computing system 120 structuring chatbot interactions into query-response pairs for cache storage. For example, the computing system 120 can associate each query with a corresponding response extracted from the summarized chatbot session data and format the pairs for retrieval operations. For example, the computing system 120 can link queries and responses by assigning references or session-based identifiers to JSON objects storing embeddings of queries or corresponding responses. Act 520 can include storing queries and responses. For example, the computing system 120 can store linked query-response pairs in various formats including, for example, structured data objects, embedding representations, or indexed records in cache memory 155 to service subsequent queries provided to a chatbot or chatbot interface.

FIG. 6 depicts an illustrative architecture of a computing system 600. The block diagram of the example computing system 600 can also be referred to as the computer system 600 or a computing environment 600. Computing system 600 can be used to implement elements of the systems and methods described and illustrated herein, such as, commands, instructions, or data described herein. Computing system 600 can be included in or run any device (e.g., a data processing system, client device 110, computing system 120, session modeler 125, AI model 130, validation system 135, link creation system 145, cache retrieval and storage system 150, cache memory 155, etc.).

Computing system 600 can include at least one bus data bus 605 or other communication device, structure or component for communicating information or data. Computing system 600 can include at least one processor 610 or processing circuit coupled to the data bus 605 for executing instructions or processing data or information. Computing system 600 can include one or more processors 610 or processing circuits coupled to the data bus 605 for exchanging or processing data or information along with other computing systems 600. Computing system 600 can include one or more main memories 615, such as a random-access memory (RAM), dynamic RAM (DRAM), cache memory, or other dynamic storage device, which can be coupled to the data bus 605 for storing information, data and instructions to be executed by the processor(s) 610. Main memory 615 can be used for storing information (e.g., data, computer code, commands, or instructions) during the execution of instructions by the processor(s) 610.

Computing system 600 can include one or more read only memories (ROMs) 620 or other static storage device 625 coupled to the bus 605 for storing static information and instructions for the processor(s) 610. Storage devices 625 can include any storage device, such as a solid state device, magnetic disk, or optical disk, which can be coupled to the data bus 605 to persistently store information and instructions.

Computing system 600 can be coupled via the data bus 605 to one or more output devices 635, such as speakers or displays (e.g., liquid crystal display or active matrix display) for displaying or providing information to a user. Input devices 630, such as keyboards, touch screens, or voice interfaces, can be coupled to the data bus 605 for communicating information and commands to the processor(s) 610. Input device 630 can include, for example, a touch screen display (e.g., output device 635). Input device 630 can include a cursor control, such as a mouse, a trackball, or cursor direction keys, for communicating direction information and command selections to the processor(s) 610 for controlling cursor movement on a display.

The processes, systems and methods described herein can be implemented by the computing system 600 in response to the processor 610 executing an arrangement of instructions contained in main memory 615. Such instructions can be read into main memory 615 from another non-transitory computer-readable medium (CRM), such as the storage device 625. Execution of the arrangement of instructions stored thereon main memory 615 causes the computing system 600 to perform the illustrative processes described herein. One or more processors 610 in a multi-processing arrangement can also be employed to execute the instructions contained in main memory 615. Hard-wired circuitry can be used in place of or in combination with software instructions together with the systems and methods described herein. Systems and methods described herein are not limited to any specific combination of hardware circuitry and software.

Although an example computing system has been described in FIG. 6, the subject matter including the operations described in this specification can be implemented in other types of digital electronic circuitry, or in computer software, firmware, or hardware, including the structures disclosed in this specification and their structural equivalents, or in combinations of one or more of them.

The foregoing examples have been provided merely for the purpose of explanation and are in no way to be construed as limiting of the present disclosure. While implementations of the present disclosure have been described with reference to an exemplary embodiment, it is understood that the words which have been used herein are words of description and illustration, rather than words of limitation. Changes can be made, within the purview of the appended claims, as presently stated and as amended, without departing from the scope and spirit of the present disclosure in its implementations. Although implementations of the present disclosure have been described herein with reference to particular means, materials and embodiments, the present disclosure is not intended to be limited to the particulars disclosed herein; rather, the present disclosure extends to all functionally equivalent structures, methods and uses, such as are within the scope of the appended claims.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

It should be understood that the phrase "in response to" or "responsive to," as used herein, can include various causal and contextual relationships between an initiating event, action, or condition and a subsequent action or operation. That is, the phrases "in response to" or "responsive to" can include actions or operations performed directly as a result of the initiating event, action or condition, indirectly in relation to the initiating event, action, or condition, based on data or parameters derived from or otherwise related to the initiating event, action, or condition, or as a portion of a sequence or process of which the initiating event serves as one of multiple inputs, factors, or considerations causing the subsequent action or operation.

Any references to implementations or elements or acts of the systems and methods herein referred to in the singular may or can also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the implementations disclosed herein.

References to "or" can be construed as inclusive so that any terms described using "or" can indicate any of a single, more than one, and all of the described terms. References to at least one of a conjunctive list of terms can be construed as an inclusive OR to indicate any of a single, more than one, and all of the described terms. For example, a reference to "at least one of 'A' and 'B'" can include only 'A,' only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the disclosed elements and operations without departing from the scope of the present disclosure.

## Claims

1. A system, comprising:
one or more processors, coupled with memory, to:
identify a session between a client device and a chatbot;
input, into a generative artificial intelligence model, one or more queries and one or more corresponding responses from the session to construct a query and a response that represent the one or more queries and the one or more corresponding responses from the session;
validate the query and the response, constructed by the generative artificial intelligence model, based on a comparison of the query and the response with an expression of a first schema model established for a type of data field in the query and the response;
create a link between the query and the response; and
store, responsive to the validation of the query and the response, the link, the query, and the response in a cache memory, wherein the chatbot uses the link in the cache memory to service one or more subsequent queries provided to the chatbot.

2. The system of claim 1, wherein the one or more processors further:
identify, using the cache memory, a cached query of the cache memory that matches the one or more subsequent queries;
determine, using the link in the cache memory, a cached response that is linked with the cached query; and
provide, from the cache memory, responsive to determination of the cached response, the cached response to the chatbot to cause the chatbot to perform an operation using the cached response.

3. The system of claim 1 or 2, wherein the cache memory comprises:
a warm cache comprising a first plurality of cached queries linked with corresponding cached responses, wherein the first plurality of cached queries are pre-verified; and
a cold cache comprising a second plurality of cached queries linked with corresponding cached responses, wherein the second plurality of cached queries are unverified.

4. The system of any preceding claim, wherein the one or more processors further:
identify a plurality of data objects comprising pre-verified data;
extract one or more portions of the pre-verified data from the plurality of data objects using an expression of a second schema model established for a type of data field in the plurality of data objects;
construct, using the generative artificial intelligence model, a set of pre-verified queries and responses based on the one or more portions; and
store the set of pre-verified queries and responses in a warm cache.

5. The system of any preceding claim, wherein the one or more processors further:
execute a first search of a warm cache;
in response to receipt of a first indication of a failure to locate a cached query via the first search, execute a second search of a cold cache;
in response to receipt of a second indication of a failure to locate the cached query via the second search, construct a modeled response to the one or more subsequent queries using the generative artificial intelligence model; and
present, via the chatbot, the modeled response responsive to the one or more subsequent queries.

6. The system of any preceding claim, wherein the one or more processors further:
generate a plurality of metrics corresponding with the one or more subsequent queries and a plurality of queries of the cache memory;
determine one or more metrics of the plurality of metrics satisfy at least one threshold; and
identify, based on the one or more metrics satisfying the at least one threshold, at least one cached query of the plurality of queries that matches the one or more subsequent queries; and/or
the system, wherein the one or more processors further:
determine that a subject of the one or more subsequent queries corresponds with at least one of a location or jurisdiction;
select a vector model of a plurality of vector models based on the subject; and
generate, using the selected vector model, an embedding of the one or more subsequent queries.

7. The system of any preceding claim, wherein the one or more processors further:
pre-filter a plurality of vector models based on a subject of the one or more subsequent queries;
select a vector model based on a subject of the one or more subsequent queries corresponding with at least one of a location or jurisdiction, wherein each vector model of the plurality of vector models is trained using a dataset corresponding with the at least one of the location or jurisdiction; and
generate, using the selected vector model, an embedding of the one or more subsequent queries, wherein the chatbot uses the embedding to service the one or more subsequent queries provided to the chatbot; and/or
the system wherein the one or more processors further:
determine a first metric comprising a similarity score between an embedding of the one or more subsequent queries and one or more cached embeddings stored in the cache memory; and
determine a second metric comprising a distance score between the embedding and the one or more cached embeddings.

8. The system of any preceding claim, wherein to input the one or more queries and corresponding responses, the one or more processors further:
generate a prompt corresponding to a subject of the one or more queries and the one or more corresponding responses from the session; and
provide the prompt to the generative artificial intelligence model; and/or
the system wherein to validate the query and the response, the one or more processors further:
identify, in the query and the response, a plurality of fields corresponding to the first schema model, the first schema model comprising a regular expression and a data type for each field; and
determine, based on an application of the regular expression, contents of the plurality of fields match an expected pattern of each data type; and/or
the system wherein the cache memory comprises a plurality of links between respective pairs of queries and responses.

9. A method, comprising:
identifying, by one or more processors coupled with memory, a session between a client device and a chatbot;
inputting, by the one or more processors, into a generative artificial intelligence model, one or more queries and one or more corresponding responses from the session to construct a query and a response that represent the one or more queries and the one or more corresponding responses from the session;
validating, by the one or more processors, the query and the response, constructed by the generative artificial intelligence model, based on a comparison of the query and the response with an expression of a first schema model established for a type of data field in the query and the response;
creating, by the one or more processors, a link between the query and the response; and
storing, by the one or more processors, responsive to the validation of the query and the response, the link, the query, and the response in a cache memory, wherein the chatbot uses the link in the cache memory to service one or more subsequent queries provided to the chatbot.

10. The method of claim 9, further comprising:
identifying, by the one or more processors, using the cache memory, a cached query of the cache memory that matches the one or more subsequent queries;
determining, by the one or more processors, using the link in the cache memory, a cached response that is linked with the cached query; and
providing, by the one or more processors, from the cache memory, responsive to determination of the cached response, the cached response to the chatbot to cause the chatbot to perform an operation using the cached response.

11. The method of claim 9 or 10, wherein the cache memory comprises:
a warm cache comprising a first plurality of cached queries linked with corresponding cached responses, wherein the first plurality of cached queries are pre-verified; and
a cold cache comprising a second plurality of cached queries linked with corresponding cached responses, wherein the second plurality of cached queries are unverified.

12. The method of any of claims 9 to 11, further comprising:
identifying, by the one or more processors, a plurality of data objects comprising pre-verified data;
extracting, by the one or more processors, one or more portions of the pre-verified data from the plurality of data objects using an expression of a second schema model established for a type of data field in the plurality of data objects;
constructing, by the one or more processors, using the generative artificial intelligence model, a set of pre-verified queries and responses based on the one or more portions; and
storing, by the one or more processors, the set of pre-verified queries and responses in a warm cache.

13. The method of any of claims 9 to 12, further comprising:
executing, by the one or more processors, a first search of a warm cache;
in response to receipt of a first indication of a failure to locate a cached query via the first search, executing, by the one or more processors, a second search of a cold cache;
in response to receipt of a second indication of a failure to locate the cached query via the second search, constructing, by the one or more processors, a modeled response to the one or more subsequent queries using the generative artificial intelligence model; and
presenting, by the one or more processors, via the chatbot, the modeled response responsive to the one or more subsequent queries.

14. The method of any of claims 9 to 13, further comprising:
generating, by the one or more processors, a plurality of metrics corresponding with the one or more subsequent queries and a plurality of queries of the cache memory;
determining, by the one or more processors, one or more metrics of the plurality of metrics satisfy at least one threshold; and
identifying, by the one or more processors, based on the one or more metrics satisfying the at least one threshold, at least one cached query of the plurality of queries that matches the one or more subsequent queries; and/or the method further comprising:
determining, by the one or more processors, that a subject of the one or more subsequent queries corresponds with at least one of a location or jurisdiction;
selecting, by the one or more processors, a vector model of a plurality of vector models based on the subject; and
generating, by the one or more processors, using the selected vector model, an embedding of the one or more subsequent queries.

15. A non-transitory computer-readable media (CRM) having instructions stored thereon that, when executed by one or more processors, cause the one or more processors to carry out the method of any of claims 9 to 14.
